(19) **Europäisches Patentamt / European Patent Office / Office européen des brevets**

(11) **EP 4 344 121 B1**

(12) **EUROPEAN PATENT SPECIFICATION**

(45) Date of publication and mention
of the grant of the patent:
**28.08.2024 Bulletin 2024/35**

(21) Application number: **22315217.4**

(22) Date of filing: **26.09.2022**

(51) International Patent Classification (IPC):
**H04L 9/00** *(2022.01)*    **H04L 9/30** *(2006.01)*

(52) Cooperative Patent Classification (CPC):
**H04L 9/008; H04L 9/3093**

(54) **ENCRYPTED COMPUTATION WITH A BLIND ROTATION**

VERSCHLÜSSELTE BERECHNUNG MIT BLINDROTATION

CALCUL CRYPTÉ AVEC ROTATION AVEUGLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.03.2024 Bulletin 2024/13**

(73) Proprietor: **Zama SAS**
**75002 Paris (FR)**

(72) Inventor: **Chillotti, Ilaria**
**75008 Paris (FR)**

(74) Representative: **DeltaPatents B.V.**
**Fellenoord 370**
**5611 ZL Eindhoven (NL)**

(56) References cited:
- **CHILLOTTI ILARIA ET AL: "TFHE: Fast Fully Homomorphic Encryption Over the Torus", JOURNAL OF CRYPTOLOGY, SPRINGER US, NEW YORK, vol. 33, no. 1, 25 April 2019 (2019-04-25), pages 34 - 91, XP036987049, ISSN: 0933-2790, [retrieved on 20190425], DOI: 10.1007/S00145-019-09319-X**
- **JOYE MARC ET AL: "Blind Rotation in Fully Homomorphic Encryption with Extended Keys", 23 June 2022, SPRINGER INTERNATIONAL PUBLISHING, PAGE(S) 1 - 18, XP047626280**

**Description**

**TECHNICAL FIELD**

The presently disclosed subject matter relates to a cryptographic method of performing an encrypted computation, to a corresponding cryptographic device, and to a computer readable medium.

**BACKGROUND**

Homomorphic cryptography allows one to perform encrypted computations: computations, e.g., circuit evaluations, that are performed over encrypted data by a party without that party being able to decrypt. For example, input data and computation results may be received and returned in encrypted form. Intermediate data, e.g., an internal state of the computation, may also be in encrypted form.

Even though the result of the computation is returned in an encrypted form, when decrypted the output is expected to be the same, or very close to, as if the operations had been performed on the unencrypted data. Homomorphic encryption can be used for privacy-preserving outsourced storage and computation. This allows data to be encrypted and outsourced to a cloud environment for processing and/or storage, all while encrypted.

For example, homomorphic cryptography may be applied in fields such as health care in which privacy regulations may make it difficult to share plain data, but computations on encrypted medical data may be allowable. For example, a medical model developed, say, to classify medical data may be configured to receive medical data from a third party, say a hospital, in encrypted form. The medical model might, e.g., classify medical data, e.g., as normal or abnormal, or as having some particular medical syndrome, disease, or other disorder. Using homomorphic encryption, the medical model may be applied to medical data that is received in encrypted form. This means that the party that offers the medical model does not have access to the plain medical data that corresponds to the encrypted medical data. The user of the service can decrypt the result of the medical model application.

In particular, homomorphic cryptography techniques exist that can be used, at least in principle, to compute any function on encrypted data. Such techniques are referred to as "fully homomorphic encryption" (FHE) techniques.

Known implementations of FHE use noisy ciphertexts for security reasons. For example, encryption of a data item may comprise mapping the data item to a point in a key-dependent lattice, to which noise is added. In particular, many known implementations of FHE use LWE-type ciphertexts, whose security depends on the cryptographic hardness of the Learning With Errors problem or one of its variants, such as Ring Learning With Errors (RLWE) or Generalized Learning With Errors (GLWE). Such an LWE-type ciphertext may be a LWE ciphertext comprising one or more mask values (e.g., values modulo a certain modulus $q$, or torus elements), plus a body value which is derived from the mask values and from a plaintext using an encryption key, and which contains noise. A generalization of this is a GLWE ciphertext, that encrypts and uses polynomials instead of scalar values. A RLWE ciphertext is another type of GLWE ciphertext. Other known implementations of FHE use NTRU-type ciphertexts, for which the same considerations largely apply.

When a data item has just been encrypted the noise is low - the encryption is fresh. For example, the amount of noise is so low, that if a data item were to be decrypted, the noise can be removed at some point in the decryption process, e.g., by rounding. On the other hand, the noise should be high enough to make attacks on the system sufficiently hard. For example, in the hypothetical absence of noise, many homomorphic encryption schemes could be attacked with linear algebra, or other efficient algorithms, e.g., lattice reduction algorithms. When a data item is encrypted, noise is added that is chosen so that attacks are hard while homomorphic operations can still be performed and decryption is still possible.

Most homomorphic operations increase the noise that is inherent in a homomorphically encrypted data item. When many such operations are performed, the noise may reach a level such that correct decryption is no longer possible. Generally, it is known to use a technique called bootstrapping to reduce the noise of a homomorphically encrypted value. Bootstrapping may use a public key called a bootstrapping key. By using bootstrapping to reducing noise when needed, in principle it is possible to compute any desired number of homomorphic operations.

A particular class of fully homomorphic encryption schemes are the TFHE-like homomorphic encryption schemes. Such a scheme is described in I. Chillotti et al., "TFHE: fast fully homomorphic encryption over the torus", J. Cryptol., 33(1):34-91, 2020; and I. Chillotti et al., "Programmable bootstrapping enables efficient homomorphic inference of deep neural networks", Cyber Security Cryptography and Machine Learning (CSCML 2021), vol. 12716 of Lecture Notes in Computer Science, pp. 1-19, Springer, 2021.

TFHE-like schemes differentiate themselves from other FHE schemes by supporting a comparatively very efficient technique for bootstrapping; in addition, they enable at the same time to evaluate a function during the bootstrap operation, referred to as programmable bootstrapping. The regular bootstrapping corresponds to a programmable bootstrapping with the identity function. Interestingly, the output of the programmable bootstrapping has an amount of noise that is independent of the noise in the input ciphertext. Thus, by performing the programmable bootstrapping, the noise in the input ciphertext can be reduced to a fixed amount, while possibly at the same time applying a function to the input ciphertext. By performing the programmable bootstrapping at appropriate times, it is possible to perform encrypted computations of unlimited multiplicative complexity.

In particular, the programmable bootstrapping of known TFHE-like encrypted computations typically uses a so-called blind rotation (also sometimes referred to as an accumulator update). The blind rotation evaluates a decryption of an encrypted input in an exponent of an encrypted monomial. For example, the encrypted monomial may be a GLWE encryption or a NTRU encryption. In order to evaluate the decryption, the blind rotation in many cases uses an external product. This is a product of regular encryption (e.g., GLWE or NTRU) and a so-called gadget encryption (e.g., GGSW or gadget NTRU) that results in a regular encryption. The gadget encryptions encrypt values corresponding to the decryption key. By sequentially updating the encrypted monomial (also referred to as the accumulator) by computing external products with the respective gadget encryptions, an encrypted monomial corresponding to the plaintext can be obtained. Multiplying the encrypted monomial by a so-called test polynomial (typically already before the blind rotation) corresponds to performing a function on the corresponding plaintext. In particular, Algorithm 1 of "Programmable bootstrapping enables ..." uses a CMux operation, implemented by means of the external product, that conditionally keeps or updates the accumulator based on a gadget encryption of a bit of the decryption key.

Document CHILLOTTI ILARIA ET AL: "TFHE: Fast Fully Homomorphic Encryption Over the Torus", JOURNAL OF CRYPTOLOGY, SPRINGER US, NEW YORK, vol. 33, no. 1, 25 April 2019 (2019-04-25), pages 34-91, XP036987049, ISSN: 0933-2790, DOI: 10.1007/S00145-019-09319-X describes a fast torus-based FHE and JOYE MARC ET AL: "Blind Rotation in Fully Homomorphic Encryption with Extended Keys", SPRINGER INTERNATIONAL PUBLISHING, PAGE(S) 1 - 18, XP047626280 describes an efficient implementation of blind rotation for a torus-based FHE.

## SUMMARY

Despite being very efficient compared to other techniques, the known blind rotation, and the programmable bootstrapping that uses it, still incurs a significant performance overhead. At the same time, blind rotation is an important operation that is typically carried out many times during an encrypted computation. It would therefore be desirable to provide techniques that perform the blind rotation more efficiently.

According to one aspect of the invention, a cryptographic method of performing an encrypted computation is provided, as defined by the claims. According to a further aspect, a device corresponding to the computer-implemented method is provided, as defined by the claims. According to another aspect, a computer-readable medium is provided as defined by the claims.

Various aspects relate to an encrypted computation that comprises a blind rotation. The blind rotation may be configured to evaluate a decryption of an encrypted input in an exponent of an encrypted monomial, optionally in combination with the application of a test polynomial to the monomial. To evaluate the decryption, the blind rotation may use a bootstrapping key. The bootstrapping key may comprise key ciphertexts corresponding to a decryption key for the decryption of the encrypted input; for example, respective key ciphertexts may correspond to respective bits of the decryption key; multiple key ciphertexts may correspond to a bitwise representation of non-binary digits of the decryption key, etc. As discussed elsewhere in more detail, various known encrypted computation techniques use a blind rotation with such functionality.

As discussed, various known blind rotations, for example blind rotations that use a CMux operator, are based on using an external product to sequentially update an accumulator. As the inventors realized, this has a significant disadvantage. Namely, sequentially updating an accumulator makes it hard to improve the efficiency of the blind rotation via concurrency, e.g., via multithreading or multiprocessing. For example, when a single programmable bootstrapping is evaluated, parallelization of the blind rotation step is not possible using such known techniques.

Interestingly, the inventors envisaged another way of performing a blind rotation, that is not based on sequentially updating an accumulator. For this, the inventors made some important observations. A first observation is that the computation of the blind rotation can be phrased in terms of computing a product of respective decryption ciphertexts. The decryption ciphertexts may be determined based on the encrypted input and based on the key ciphertexts of the bootstrapping key. These decryption ciphertexts can in many cases even be determined independently from each other, in the sense that the computation of a decryption ciphertext does not use another computed decryption ciphertext. Here, the exact shape of the decryption ciphertext depends on the encryption used (e.g., whether the decryption key as binary or ternary keys) and on the implementation.

A second observation is that the described encrypted polynomial product can be computed by computing internal products of the decryption ciphertexts, as opposed to computing the whole product using external products (e.g., GLWE + GGSW to GLWE). An internal product is an encrypted product where the inputs and output are the same type of encryption. In particular, they can all be gadget encryptions (e.g., GGSW + GGSW to GGSW). Although for example the "Programmable bootstrapping enables efficient homomorphic inference of deep neural networks" reference only describes an external product of gadget encryptions, the inventors realized that the use of an internal product is possible as well. In particular, the internal product may be implemented as respective external products of encryptions (e.g. GLWE) making up one of the two gadget encryptions. Such an internal product of gadget encryptions has a relatively limited noise growth (typically, the same as an external product with a gadget encryption) and does not require to use large ciphertext moduli. When using gadget encryption, it is also possible to efficiently convert the encrypted polynomial product to a non-gadget encryption, e.g., GLWE or LWE, or to have the encrypted product itself be a non-gadget encryption, as illustrated by various examples given herein.

Using internal products is advantageous, because these internal products can be computed at least in part in parallel, for example as a logarithmic-depth product tree. This is not possible when using accumulators, that are inherently sequential, and also not when using only external products, since it is not possible to apply a further external product directly to the results of two other external products. Effectively, using an internal product in the blind rotation allows for composability between operations and so allows to break the sequentiality in the blind rotation. This means that the blind rotation can be sped up significantly by taking advantage of parallelization, e.g., using multiprocessing or multi-threading techniques. In particular, the depth of the computation of a blind rotation can be reduced from a factor $n$ to a factor $\log_2(n)$, This is particularly advantageous in a hyper-parallelizable scenario, e.g., when the internal products are computed on a GPU or FPGA or other processor system that allows e.g., at least 16, at least 32, or even at least 128 internal products computed at the same time.

In an embodiment, one or more of the internal products may themselves be implemented by performing multiple external products, where these multiple external products of the same internal product are also performed at least in parallel. Thereby, parallelizability of the blind rotation can be improved even further.

In an embodiment, a decryption ciphertext may be determined based on a linear combination of one or more key ciphertexts of the bootstrapping key. Such a linear combination may be expressed as a sum of products of the respective key ciphertexts by respective coefficient polynomials, to which a constant polynomial may or may not be added. The polynomials may be based on the encrypted input. In particular, the key ciphertexts of the bootstrapping key may encrypt bits. This type of bootstrapping key may be used to perform bootstrapping for a decryption key with binary or ternary digits, or other sets of digits with a limited number of possible values, say, at most 16.

By determining the coefficient polynomials for the encrypted bits of the bootstrapping key in a suitable way, the decryption ciphertext may be determined in such a way that it represents the contribution to the decryption of the encrypted input that corresponds to a specific part of the decryption key, e.g., a particular digit. For example, a decryption ciphertext can be based on one key ciphertext encrypting a binary digit of the decryption key; based on two key ciphertexts together representing a ternary digit of the decryption key; etcetera. Various examples are given herein. In any case, by determining a linear combination of bits, it is possible to efficiently determine a contribution to the decryption corresponding to a digit of the decryption key. The decryption ciphertexts themselves may be computed wholly or partially in parallel. Also the polynomial product may be computed from the decryption ciphertext wholly or partially in parallel.

In an embodiment, a coefficient polynomial for a key ciphertext is based on a monomial having a mask value of the encrypted input as exponent. For example, the coefficient polynomial $p(X)$ may comprise a term $X^{a_i}$, where $a_i$ is a mask value of the encrypted input (possibly after scaling). By using such a term in the coefficient, a decryption ciphertext may be obtained comprising a term $X^{a_i s}$, where s is a digit of the decryption key. The decryption function in particular for LWE-type encryptions can be phrased based on such products of mask values and decryption key digits. Thus, a contribution to the decryption in the exponent of the encrypted input can be obtained.

In an embodiment, a decryption ciphertext that is determined as a linear combination, may encrypt a monomial $X^{a_i s_i}$ having as exponent a product of an element $s_i$ of the decryption key, and a mask value $a_i$ of the (possibly scaled) encrypted input. This is a useful contribution to the decryption in the exponent since a decryption function e.g., for LWE may be phrased based on such products of decryption key elements and mask values. For example, for a key with binary digits, a decryption ciphertext may be based on a key ciphertext encrypting a key digit itself; for non-binary key, a decryption ciphertext may be based on multiple key ciphertexts together representing the key digit.

In an embodiment, the decryption ciphertexts of which an encrypted polynomial product is computed, may be obtained by selecting them as a subset of the key ciphertexts. The subset may be selected based on the encrypted input. This type of decryption ciphertext is for example useful with decryption keys that have digits with a large set of possible values, e.g., the whole field. Also with such decryption keys, a known accumulator-based blind rotation using external products can instead be implemented by internal products that are computed at least in part as parallel, also in this case leading to improved parallelizability and thereby improved performance.

In an embodiment, the encrypted output that is output by the blind rotation, may encrypt a polynomial representing the application of a lookup table to the encrypted input. This is typically the case when using the blind rotation in a programmable bootstrapping, for example. On the other hand, when using the blind rotation as a monomial lift, such a lookup table may not be used. The encrypted output representing the lookup table application may be based on computing an encrypted polynomial product of the decryption ciphertexts and a test polynomial that encodes the lookup table. The test polynomial may be obtained as an encrypted or non-encrypted test polynomial, and applying the test polynomial may be performed in several ways, e.g., as a scalar multiplication by a non-encrypted test polynomial, as an internal product, or as an external product. This is also discussed in more detail elsewhere. In any case, given the encrypted output representing the lookup table application, from this encrypted output, an encryption of the output value of the lookup table may be extracted.

In an embodiment, the encrypted polynomial product of the decryption ciphertexts may be computed by a logarithmic-depth product tree. In particular, the encrypted polynomial product may be computed by computing internal (and optionally also external) products of decryption ciphertexts and/or internal product outputs, where the number of subsequent internal or external products applied to a ciphertext, scales logarithmically in the number of decryption ciphertexts. For example, the number of subsequent products applied to a decryption ciphertext may be at most $\log_2 n$ or at most $2 \cdot \log_2 n$, where $n$ is the number of decryption ciphertexts. The products at a certain depth may be computed in parallel. Thus, by using a logarithmic-depth product tree, a great degree of parallelism may be achieved, leading to a particularly efficient implementation.

In an embodiment, to determine the encrypted polynomial product, an internal product may be computed of first and second ciphertexts, e.g., first and second gadget ciphertexts, wherein the first and second ciphertexts are both based on multiple decryption ciphertexts. For example, the first and second ciphertexts may both result from an internal product. Such a product of products is not possible when using only external product, because an external product cannot take as input the results of two other external products. Interestingly, by using an internal product as envisaged by the inventors, such products of products can be used, and in particular the first and second ciphertexts may be computed in parallel, improving efficiency.

In an embodiment, the encrypted polynomial product of the decryption ciphertexts is a gadget encryption, e.g., a GGSW encryption or a gadget NTRU encryption. Such a gadget encryption may result from using only internal products to determine the encrypted polynomial product. Obtaining a gadget encryption as result is advantageous because it allows e.g. a lookup table to be applied by performing an external product of the gadget encryption with a further encryption, providing a result with little noise while also allowing the application of encrypted lookup tables. It is also possible to extract the output of the blind rotation from the gadget encryption without performing an external product, however, as also discussed elsewhere.

In an embodiment, the encrypted polynomial product may be computed by further computing one or more external products. In particular, the final encrypted polynomial multiplication that results in the encrypted polynomial product, may be an external product between a gadget and a non-gadget encryption. The non-gadget encryption may in turn be obtained as an external product, etc. For example, when using a multiplication tree, at each level of the tree, one external product may be used. Also one of the decryption ciphertexts can be a non-gadget ciphertext, with the remainder of the decryption ciphertexts being gadget ciphertexts, for example. Generally, using external instead of internal products is more efficient, so using external products in this way gives a performance improvement; interestingly, without impacting parallelizability.

This is particularly advantageous when the blind rotation does not use a lookup table, e.g., when the blind rotation is used in a monomial lift; since in this case, there is no noise increase due to multiplying the encrypted polynomial product by a lookup table polynomial.

When using the provided techniques in a cryptographic device, the processor subsystem of that cryptographic device may comprise multiple cores. In such a case, the computation of the encrypted polynomial product may be distributed over multiple cores. In particular, a first internal multiplication may be performed on a first core and a second internal multiplication may be simultaneously performed on a second core. Thus, the provided techniques allow the blind rotation to make better use of multi-core processors.

The provided techniques for improved computations on encrypted data may be applied in a wide range of practical applications. Such practical applications include the encrypted evaluation of software programs without having access to plain data. For example, one may evaluate medical diagnostic software on medical data without having actual access to said medical data. Medical data may comprise a medical image. A medical image may comprise, e.g., multi-dimensional image data, e.g., to two-dimensional (2D), three-dimensional (3D) or four-dimensional (4D) images, acquired by various acquisition modalities such as, but not limited to, standard X-ray Imaging, Computed Tomography (CT), Magnetic Resonance Imaging (MRI), Ultrasound (US), Positron Emission Tomography (PET), Single Photon Emission Computed Tomography (SPECT), and Nuclear Medicine (NM).

In an embodiment, the provided techniques may be used to evaluate a neural network on encrypted inputs. The party evaluating the neural network may or may not have plaintext access to the trained parameters of the neural network, e.g., weights and biases. In general, the techniques provided herein improve the efficiency of evaluating the neural network especially in multiprocessing environments.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

## BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Fig. 1a shows a cryptographic device;
Fig. 1b shows an encrypted computation system;
Fig. 2a shows a controlled multiplexer operation using an external product;
Fig. 2b shows a blind rotation operation using an external product;
Fig. 2c shows a controlled multiplexer operation using an internal product;
Fig. 3 shows a blind rotation operation using an internal product;
Fig. 4a shows an encrypted polynomial product operation;
Fig. 4b shows an encrypted polynomial product operation;
Fig. 5 shows a method of performing an encrypted computation;
Fig. 6 shows a computer readable medium;
Fig. 7 shows a processor system.

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

First, some general information and notation is provided that applies to several embodiments. Throughout this specification, the parameter q represents the modulus for encrypted values, e.g., a positive integer. $\mathbb{Z}_q$ denotes the ring $\mathbb{Z}/q\mathbb{Z}$. The parameter $N$ represents the size of various polynomials that are used and is typically a power of two. $\mathfrak{R}$ denotes the ring $\mathbb{Z}[X]/p(X)$ and $\mathfrak{R}_q$ denotes the ring $\mathbb{Z}_q[X]/p(X)$, where $p(X)$ is a cyclotomic polynomial, e.g., $p(X) = (X^N + 1)$ if $N$ is a power of two. $\chi_\sigma$ denotes a Gaussian distribution with a mean set to zero and a standard deviation set to $\sigma$. The symbol $\|$ denotes concatenation. The abbreviation MSB (resp. LSB) may be used to refer to the most (resp. least) significant bits of an integer. The abbreviation LUT is used to refer to a look-up table. The (computational) complexity of an algorithm Alg, potentially dependent on some parameters $p_1, \cdots, p_n$, is denoted $\mathbb{C}_{\mathrm{Alg}}^{p_1, \cdots, p_n}$.

Various embodiments use LWE-type encryption. Such encryption may be based on the cryptographic hardness of the LWE family of problems, such as Learning With Errors (LWE) or Ring Learning With Errors (RLWE), or the more general Generalized Learning With Errors (GLWE) that covers both LWE and RLWE. Generally, an LWE ciphertext may comprise one or more mask values and a body value which is derived from at least the mask values and the plaintext value. The values are typically integers modulo a given modulus $q$. Various embodiments also use GLWE (Generalized Learning With Error)-type ciphertexts. A GLWE ciphertext may comprise one or more mask polynomials, and a body polynomial which is derived from at least the mask polynomials and a plaintext polynomial. A GLWE ciphertext may be defined modulo a modulus $q$ and a quotient polynomial $p(X)$. A LWE ciphertext may be regarded as a particular kind of GLWE ciphertext where the quotient polynomial has degree one. A GLWE ciphertext that is not a LWE ciphertext, e.g.,

using polynomials that are not of degree zero, is also referred to as a polynomial ciphertext. Another particular kind of ciphertext is a RLWE (Ring Learning With Errors) ciphertext where the number of mask polynomials is one.

In particular, a.GLWE ciphertext of a message $M \in \Re_q$ under the secret key $\mathbf{S} \in \Re^k$ may be defined as follows:

$$\mathrm{CT} = \left(A_1, \cdots, A_k, B = \sum_{i=1}^{k} A_i \cdot S_i + \tilde{M} + E\right)$$

$$\in \mathrm{GLWE}_{\mathbf{S}}^q\left(\tilde{M}\right) \subseteq \Re_q^{k+1}$$

Here, $\mathbf{S} = (S_1, \cdots, S_k) \in \Re^k$ is a GLWE secret key with coefficients sampled e.g., from a uniform binary, uniform ternary or Gaussian distribution. A secret key element may be denoted $S_i = \sum_{j=0}^{N-1} s_{i,j} X^j$. The polynomial coefficients $s_{i,j}$ of the respective polynomials of a secret key, are referred to as the digits of the secret key. It is understood that digits do not need to be nonnegative. In the particular case of LWE, the polynomials are degree-0 polynomials, e.g., the constant term, being the value itself, is the only digit.

Further, $\tilde{M}$ may be an appropriate scaling of the input message. Mask elements $\{A_i\}_{i=1}^{k}$ are polynomials in $\Re_q$ with coefficients sampled e.g. from the uniform distribution in $\mathbb{Z}_q$, $B$ is also referred to as the body element. $E$ is a noise (error) polynomial in $\Re_q$ such that its coefficients are sampled e.g. from a Gaussian distribution $\chi_\sigma$ The parameter $k$ is a positive integer and represents the number of polynomials in the GLWE secret key.

To simplify notations, sometimes the notation $S_{k+1} = -1$ is adopted. This value or polynomial $S_{k+1}$ is however not considered to be part of the GLWE secret key. The GLWE secret key may comprise only the respective secret elements $S_i$ corresponding to the respective mask elements $A_i$, not the body element $B$. Thus the digits of the GLWE secret key may comprise only the digits of these secret elements (values or polynomials) that correspond to mask elements (values or polynomials) of the ciphertext.

In this example, a LWE ciphertext is a GLWE ciphertext with $N = 1$. In this case, the parameter $n = k$ may be considered for the size of the LWE secret key and both the ciphertext and the secret may be denoted with a lower case, e.g. $ct^q$ and $\mathbf{s}$, respectively. A RLWE ciphertext in this example is a GLWE ciphertext with $k = 1$ and $N > 1$, e.g., a 2-power.

Although the integer $q$ is used throughout this specification to denote a ciphertext modulus, it is noted that multiple ciphertext moduli may be used within an encrypted multiplication, e.g., with modulus switching being used to align ciphertexts under the same q when needed.

Instead of or in addition to using LWE-type ciphertexts, it is also possible to use different lattice encryptions, in particular NTRU ciphertexts. Such encryption may be based on the cryptographic hardness of the NTRU family of problems. For example, a NTRU encryption of a message $\mu$ may be defined by adding a quotient of a noise polynomial $g$ and a private key polynomial $f$ to the message, e.g., $f \in \mathbb{Z}_{N,q}[X]$ may be an invertible polynomial (typically with small coefficients); and the NTRU encryption may be given by $c = g/f + \mu \in \mathbb{Z}_{N,q}[X]$, or, writing $g := e_1 + f \cdot e_2$, by $c = e_1/f + \mu + e_2$. In particular, an NTRU ciphertext may comprise only a single polynomial. Security of such ciphertexts may be based on the NTRU assumption. Both NTRU encryptions of values and of polynomials are possible. Examples of suitable NTRU encryptions are described in C. Bonte et al., "FINAL: Faster FHE instantiated with NTRU and LWE", https://ia.cr/2022/074; and K. Kluczniak, "NTRU-v-um: Secure Fully Homomorphic Encryption from NTRU with Small Modulus", https://ia.cr/2022/089.

The above examples describe secret-key, symmetric encryption variants. The techniques provided herein apply equally to public-key variants as are known per se. In the latter, case, for example, the above secret key may be used as the private key, wherein the public key comprises one or more encryptions of zero, e.g., see R. Rothblum, "Homomorphic encryption: From private-key to public-key", Theory of Cryptography (TCC 2011), vol. 6597 of Lecture Notes in Computer Science, pp. 219-234, Springer, 2011.

Various embodiments operate in the TFHE setting, meaning that ciphertexts are used that support a programmable bootstrapping (PBS). The programmable bootstrapping may take as input a ciphertext, and output a ciphertext of the same message, or a function of that message (in other words, a lookup table applied to that message), with input-independent noise. The PBS may comprise a blind rotation that evaluates a homomorphic decryption of the input ciphertext in the exponent of a polynomial.

In particular, the programmable bootstrapping may take as input a ciphertext encrypting a message $m$; a bootstrapping key; and an encryption of a lookup table $L$. The encryption can be a trivial encryption, e.g., with fixed randomness. The programmable bootstrapping may output an encryption with a fixed level of noise encrypting the message $L[m]$. In particular, the function to be evaluated may be represented as a look-up table, and the bootstrapping may rotate this table, represented as a polynomial $P_{\mathsf{LUT}}$, in order to output the correct element in the table. In case of a traditional bootstrapping, the function evaluated is the identity function.

As is known per se, generally, homomorphic decryption performed by a blind rotation may be correct up to scaling and rounding, and the LUT may perform rescaling and/or rounding to account for this.

Various blind rotations use gadget encryption. Generally, a gadget ciphertext may be defined as a ciphertext that comprises multiple constituent ciphertexts encrypting respective values based on a plaintext and defined based on a gadget matrix. For LWE/GLWE-type encryption, the gadget ciphertext can be a GGSW ciphertext as known e.g. from "TFHE: fast fully homomorphic encryption over the torus" or "Programmable bootstrapping enables ...". In the NTRU setting, the gadget encryption can for example be the NGS encryption of C. Bonte et al., "FINAL: Faster FHE instantiated with NTRU and LWE", https://ia.cr/2022/074; or the gadget NTRU encryption of K. Kluczniak, "NTRU-v-um: Secure Fully Homomorphic Encryption from NTRU with Small Modulus", https://ia.cr/2022/089.

Various programmable bootstrappings are known per se that use a blind rotation to evaluate a decryption of an encrypted input in an exponent of an encrypted monomial. Generally, a programmable bootstrapping may be implemented by performing a modulus switching; followed by a blind rotation; followed by a conversion of the blind rotation result to a value ciphertext, e.g., by means of a sample extraction followed by an optional key switching. Here, known blind rotations are in many cases implemented in the art by sequentially applying external products to an accumulator based on gadget ciphertext. By instead using a blind rotation as provided herein, performance of various programmable bootstrappings can be improved.

An example of such a programmable bootstrapping in the LWE setting is given in "Programmable bootstrapping enables efficient homomorphic inference of deep neural networks", with a similar construction also being known from I. Chillotti et al., "TFHE: fast fully homomorphic encryption over the torus", J. Cryptol., 33(1):34-91, 2020. Another example in the LWE setting is provided in L. Ducas et al., "FHEW: bootstrapping homomorphic encryption in less than a second", proceedings EUROCRYPT 2015, where the blind rotation is implemented by the "Refresh" algorithm (Algorithm 1) that implements the blind rotation by updating the accumulator ACC by selecting key ciphertexts of a bootstrapping key based on an encrypted input, thereby decrypting in the exponent of a monomial represented by the accumulator.

In the NTRU setting, such a programmable bootstrapping is for example provided in Algorithm 2 of "FINAL: Faster FHE instantiated with NTRU and LWE", where an NTRU-encrypted accumulator is updated sequentially by external products with NGS ciphertexts, computed from a base scheme ciphertext (e.g. a LWE ciphertext). Another example is the "Bootstrap" algorithm of "NTRU-$v$-um: Secure Fully Homomorphic Encryption from NTRU with Small Modulus", in which a NTRU-encrypted ciphertext is sequentially updated based on an external product "GMul" involving a gadget NTRU-encrypted key ciphertext.

The secret keys used in this specification, may be sparse secret keys. A sparse binary (resp. ternary) secret key of hamming weight $h \in \mathbb{N}$ may be defined as a secret key such that its polynomial coefficients are in {0,1} (resp. {-1, 0, 1}) and contain exactly $h$ non-zero coefficients. When using such keys, the dimension $k$, the polynomial ring $\mathfrak{R}_q$ (including the polynomial degree $N$), the distribution (binary or ternary), and the hamming weight $h$ may be publicly known. Sparse secret keys can be beneficial for homomorphic computation, see, e.g., J. H. Cheon et al., "Homomorphic encryption for arithmetic of approximate numbers", proceedings ASIACRYPT 2017.

More generally, various types of secret key may be used, with respective parameters that are publicly known, e.g., to the party performing the encrypted computation. Such parameters typically include the size of the secret key (e.g., the dimension $k$ and the polynomial ring for elements of the secret key), and the ring used for the encrypted computation. For example, the following types of secret key, with the indicated public knowledge, may be used:

| Key Type | Dimension | Ring | Distribution | Hamming Weight |
| --- | --- | --- | --- | --- |
| Uniform Binary | $k$ | $\mathfrak{R}_q$ | U({0,1}) | unknown |
| Uniform Ternary | $k$ | $\mathfrak{R}_q$ | U({-1,0,1}) | unknown |
| Gaussian | $k$ | $\mathfrak{R}_q$ | $N(\mu, \sigma^2)$ | unknown |
| Uniform | $k$ | $\mathfrak{R}_q$ | $U(\mathbb{Z}_q)$ | unknown |

Throughout this specification, plaintexts may be referred to as integers modulo $\mathbb{Z}_q$. Equivalently, such values may be regarded as values from a discretization of the real torus $\mathbb{T} = \mathbb{R}/\mathbb{Z}$, as is done in several of the references mentioned above. Namely, integers modulo a given modulus and discretized torus elements may be used interchangeably, in particular, there exists an isomorphism between $\mathbb{Z}_q$ and $\frac{1}{q}\mathbb{Z}/\mathbb{Z}$ as also noted in the literature, e.g., see C. Boura et al., "CHIMERA: Combining Ring-LWE-based Fully Homomorphic Encryption Schemes", J. Math. Cryptol., 14(1):316-338, 2020.

The programmable bootstrapping operation in TFHE-like schemes makes them an appealing choice for a wide range of applications. Because bootstrapping is relatively efficient compared to many other FHE schemes, it is much more feasible to perform relatively complex computations, e.g., with a multiplicative depth of at least 10, at least 50, or at least 100. In particular, the cryptographic parameters of TFHE-like schemes can be selected based on the desired precision and resulting computational cost, independently from the quantity of homomorphic operations and their circuit depth. In other FHE schemes, in contrast, bootstrapping can be so inefficient that, in practice, these schemes are typically applied in a levelled way, meaning that their parameters are selected depending on a given computation such that it can be performed without the need for bootstrapping. Such a levelled approach is not feasible for more complex computations, however, so in such cases, TFHE-like schemes are particularly beneficial.

In particular, in the LWE setting, the security of GLWE-based ciphertexts is based on the distribution of the secret key, and on three main parameters: $n = kN$, where $N$ is the degree of the quotient polynomial, $k$ is the number of random mask polynomials of a ciphertext, and $n$ is the length of the secret key; $q$, the ciphertext modulus; and $\sigma$, the statistical parameter of the noise, e.g., its standard deviation. Given these parameters, it is known per se how to estimate a degree of security that is provided, see, e.g., M. Albrecht et al., "On the concrete hardness of Learning with Errors", Journal of Mathematical Cryptology, 9(3):169-203, 2015.

In embodiments herein, the parameters of TFHE-like ciphertexts that are used may be selected based on a desired security level and based on a desired accuracy of operations such as linear combination of ciphertexts and/or applying a programmable bootstrapping, in other words, a noise level resulting from applying these operations. Interestingly, in the TFHE setting, security parameters may be selected independently of the computational complexity, e.g. independently of the multiplicative depth of the computation. This is unlike for non-TFHE-like schemes, where the security parameters are typically chosen to limit or eliminate bootstrappings.

In particular, LWE-based ciphertexts and/or GLWE-based ciphertexts used in the TFHE setting herein may use a relatively small modulus, e.g., of at most 32 bits, at most 64 bits, or at most 128 bits. This modulus is typically selected independent from the computation to be carried out, e.g., it is selected depending on a desired precision and/or efficiency. Parameters $N$, $k$, and/or $\sigma$ may be selected to achieve a desired security level, also typically independently from the computation to be carried out. For example, N may be set to at least 512 and/or at most 2048 or 4096, e.g., to 1024. Such values for $N$ are not typically used in non-TFHE-like encryption schemes, where such values would severely restrict the computations that can be performed; instead, in non-TFHE-like schemes, $q$ and $N$ are typically both selected based on the desired security level, such that $q$ may be much larger.

For concreteness, various embodiments below demonstrate the invention in the LWE setting, where a blind rotation is applied to an LWE-encrypted input to obtain a GLWE-encrypted monomial, using GGSW-encrypted key ciphertexts. It will be clear from the above citations that the provided techniques are applicable more generally, and in particular also in the setting where the monomial is NTRU-encrypted and the key ciphertext are encrypted according to a corresponding gadget encryption.

Exemplary implementation options in the LWE context are now provided.

Lev, RLev & GLev Ciphertexts.

A GLev ciphertext with the base $\mathfrak{B} \in \mathbb{N}^*$ and $\ell \in \mathbb{N}^*$ levels, of a message $M \in \mathfrak{R}_q$ under the GLWE secret key $\mathbf{S} \in \mathfrak{R}^k$ is defined as the following vector of GLWE ciphertexts:

$$\overline{\mathrm{CT}} = (\mathrm{CT}_1, \cdots, \mathrm{CT}_\ell) = \mathrm{GLev}_{\mathbf{S}}^{q,\mathfrak{B},\ell}(M) \in \mathfrak{R}_q^{\ell \times (k+1)}$$

where $\mathrm{CT}_i = \mathrm{GLWE}_{\mathbf{S}}^{q}(\lfloor \frac{q}{\mathfrak{B}^i} \cdot M \rceil)$ is a GLWE ciphertext.

A GLev ciphertext with $N = 1$ may be referred to as a Lev ciphertext and in this case, the parameter $n = k$ may be considered for the size of the LWE secret key. A GLev ciphertext with $k = 1$ and $N > 1$ may be referred to as a *RLev*

*ciphertext.*

Decomposition Algorithms

A decomposition algorithm may decompose an integer or polynomial into a decomposition vector of elements with bounded values.

For example, a decomposition algorithm $\mathrm{dec}^{(\mathfrak{B},\ell)}$ in the integer base $\mathfrak{B} \in \mathbb{N}^*$ with $\ell \in \mathbb{N}^*$ levels may take as input an integer $y \in \mathbb{Z}_q$ and may output a decomposition vector of integers $(y_1, \cdots, y_\ell) \in \mathbb{Z}_q^\ell$ such that:

$$\left\langle \mathrm{dec}^{(\mathfrak{B},\ell)}(y), \left(\tfrac{q}{\mathfrak{B}^1}, \cdots, \tfrac{q}{\mathfrak{B}^\ell}\right) \right\rangle = \lfloor y \cdot \tfrac{\mathfrak{B}^\ell}{q} \rceil \cdot \tfrac{q}{\mathfrak{B}^\ell} \in \mathbb{Z}_q$$

where $\langle \cdot, \cdot \rangle$ is an inner product operation. This example decomposition starts from the MSB, but that is not needed. A decomposition may be defined for a vector of integers, resulting in a vector of decomposition vector of integers.

An integer polynomials $Y \in \mathfrak{R}_q$ may similarly be decomposed into a decomposition vector of polynomials $(Y_1, \cdots, Y_\ell) \in \mathfrak{R}_q^\ell$ such that:

$$\left\langle \mathrm{dec}^{(\mathfrak{B},\ell)}(Y), \left(\tfrac{q}{\mathfrak{B}^1}, \cdots, \tfrac{q}{\mathfrak{B}^\ell}\right) \right\rangle = \lfloor Y \cdot \tfrac{\mathfrak{B}^\ell}{q} \rceil \cdot \tfrac{q}{\mathfrak{B}^\ell} \in \mathfrak{R}_q$$

Similarly, a vector of polynomials may be decomposed into a vector of decomposition vectors of polynomials.

GSW, RGSW & GGSW Ciphertexts.

A GGSW ciphertext with the base $\mathfrak{B} \in \mathbb{N}^*$ and $\ell \in \mathbb{N}^*$ levels, of a message $M \in \mathfrak{R}$ under the GLWE secret key $\mathbf{S} = (S_1, \cdots, S_k) \in \mathfrak{R}^k$ may be defined as the following vector of GLev ciphertexts:

$$\overline{\overline{\mathrm{CT}}} = \left(\overline{\mathrm{CT}}_1, \cdots, \overline{\mathrm{CT}}_{k+1}\right) = \mathrm{GGSW}_{\mathbf{S}}^{q,\mathfrak{B},\ell}(M) \in \mathfrak{R}_q^{(k+1)\times\ell\times(k+1)}$$

where $\overline{\mathrm{CT}}_i = \mathrm{GLev}_{\mathbf{S}}^{q,\mathfrak{B},\ell}(-S_i \cdot M)$ is a GLev ciphertext. Here, by convention, $S_{k+1} = -1$.

A GGSW ciphertext with $N = 1$ may be referred to as a GSW ciphertext. A GGSW ciphertext with $k = 1$ and $N > 1$ may be referred to as a RGSW ciphertext.

A GGSW ciphertext is based on a gadget matrix, as follows. A GGSW ciphertext may be denoted as $Z + M \cdot G^{q,\mathfrak{B},\ell}$, where $Z \in \mathfrak{R}_q^{(k+1)\ell\times(k+1)}$ is a list of $(k+1)\ell$ GLWE encryptions of zero and $G$ is the so-called gadget matrix.

In particular $G^{q,\mathfrak{B},\ell} = Id_{k+1} \otimes \mathbf{g}^\top \in \mathfrak{R}_q^{(k+1)\ell\times(k+1)}$, where $\mathbf{g} = (q/\mathfrak{B}, ..., q/\mathfrak{B}^\ell)$. It may be noted that $G^{q,\mathfrak{B},\ell}$ can be used as a trivial encryption of the constant message 1.

External product

An external product may multiply a GGSW and a GLWE ciphertext, encrypted under the same secret key:

- $\overline{\overline{\mathrm{CT}}} = \mathrm{GGSW}_{\mathbf{S}}^{q,\mathfrak{B},\ell}(M_1)$, encrypting a message $M_1 \in \mathfrak{R}_q$ ;

- $\mathrm{CT} = \mathrm{GLWE}_{\mathbf{S}}^q(\Delta \cdot M_2)$, encrypting a message $M_2 \in \mathfrak{R}_q$ ;

The result may be a GLWE ciphertext $\mathrm{CT}' = \mathrm{GLWE}_S^q(\Delta \cdot M_1 \cdot M_2)$ encrypting the product between the two original messages under the same secret key. The operation, denoted herein as $\boxdot$, may be implemented as an inner product between the input GGSW and the decomposition of the input GLWE:

$$\mathrm{CT}' = \overline{\overline{\mathrm{CT}}} \boxdot \mathrm{CT} = \left\langle \mathrm{dec}^{(\mathcal{B},\ell)}(\mathrm{CT}), \overline{\overline{\mathrm{CT}}} \right\rangle.$$

Internal product

An internal product of GGSW ciphertexts may be defined as a multiplication between two GGSW ciphertexts, encrypted under the same secret key:

- $\overline{\overline{\mathrm{CT}}}_1 = \left(\overline{\mathrm{CT}}_1, \cdots, \overline{\mathrm{CT}}_{k+1}\right) = \left(\mathrm{CT}_{1,1}, \cdots, \mathrm{CT}_{1,\ell}, \cdots, \mathrm{CT}_{k+1,1}, \cdots, \mathrm{CT}_{k+1,\ell}\right) = \mathrm{GGSW}_S^{q,\mathcal{B},\ell}(M_1)$, encrypting a message $M_1 \in \mathfrak{R}_q$;

- $\overline{\overline{\mathrm{CT}}}_2 = \mathrm{GGSW}_S^{q,\mathcal{B},\ell}(M_2)$, encrypting a message $M_2 \in \mathfrak{R}_q$

The result may be a GGSW ciphertext $\overline{\overline{\mathrm{CT}}}' = \mathrm{GGSW}_S^{q,\mathcal{B},\ell}(M_1 \cdot M_2)$ encrypting the product between the two original messages under the same secret key. The operation, denoted herein as $\boxtimes$, may be implemented as respective independent external products between one of the two inputs seen as GGSW and the GLWE ciphertexts comprised in the other input:

$$\overline{\overline{\mathrm{CT}}}' = \overline{\overline{\mathrm{CT}}}_1 \boxtimes \overline{\overline{\mathrm{CT}}}_2 = \left(\overline{\overline{\mathrm{CT}}}_2 \boxdot \mathrm{CT}_{1,1}, \ldots, \overline{\overline{\mathrm{CT}}}_2 \boxdot \mathrm{CT}_{k+1,\ell}\right).$$

The product is commutative, so it can be done the other way around as well. It may moreover be noted that the respective external products that make up the internal product, can be performed in parallel to each other as well.

As also mentioned elsewhere, the techniques provided in this specification are not specific to the (G)LWE setting and can in particular be used for NTRU encryption as well. In particular, the inventors realized that an internal product of the gadget NTRU encryptions of "FINAL: Faster FHE instantiated with NTRU and LWE" (referred to in that reference as NGS vector encryptions), can be defined as follows. Using the notation of that reference, let $\vec{c}_1 = \vec{g}_1/f + \mathrm{g} \cdot m_1 \in R_Q^\ell$ and $\vec{c}_2 = \vec{g}_2/f + \mathrm{g} \cdot m_2 \in R_Q^\ell$ be two NGS vector encryptions. The internal product can in this case be defined as:

$$\vec{c}_{out} = \vec{c}_1 \boxtimes \vec{c}_2 = \mathrm{g}^{-1}(\vec{c}_1) \cdot \vec{c}_2 \in R_Q^\ell$$

and can result in an NGS vector encryption encrypting the product $m_1 \cdot m_2$ under the same secret. The product can alternatively be computed as $\mathrm{g}^{-1}(\vec{c}_2) \cdot \vec{c}_1$. Here, $\mathrm{g}^{-1}(\vec{c}_1)$ refers to applying the $\mathrm{g}^{-1}(\cdot)$ function to the respective $\ell$ components of $\vec{c}_1$ in $R_Q$. To see that this is correct, it may be noted that:

$$\vec{c}_{out} = \vec{c}_1 \boxtimes \vec{c}_2$$
$$= \mathfrak{g}^{-1}(\vec{c}_1) \cdot \vec{c}_2$$
$$= \mathfrak{g}^{-1}(\vec{c}_1) \cdot (\vec{g}_2/f + \mathfrak{g} \cdot m_2)$$
$$= \mathfrak{g}^{-1}(\vec{c}_1) \cdot \vec{g}_2/f + \mathfrak{g}^{-1}(\vec{c}_1) \cdot \mathfrak{g} \cdot m_2$$
$$= \mathfrak{g}^{-1}(\vec{c}_1) \cdot \vec{g}_2/f + \vec{c}_1 \cdot m_2$$
$$= \mathfrak{g}^{-1}(\vec{c}_1) \cdot \vec{g}_2/f + (\vec{g}_1/f + \mathfrak{g} \cdot m_1) \cdot m_2$$
$$= \mathfrak{g}^{-1}(\vec{c}_1) \cdot \vec{g}_2/f + \vec{g}_1/f \cdot m_2 + \mathfrak{g} \cdot m_1 \cdot m_2$$
$$= \underbrace{(\mathfrak{g}^{-1}(\vec{c}_1) \cdot \vec{g}_2 + \vec{g}_1 \cdot m_2)}_{\vec{g}_{out}}/f + \mathfrak{g} \cdot m_1 \cdot m_2 \in R_Q^\ell$$

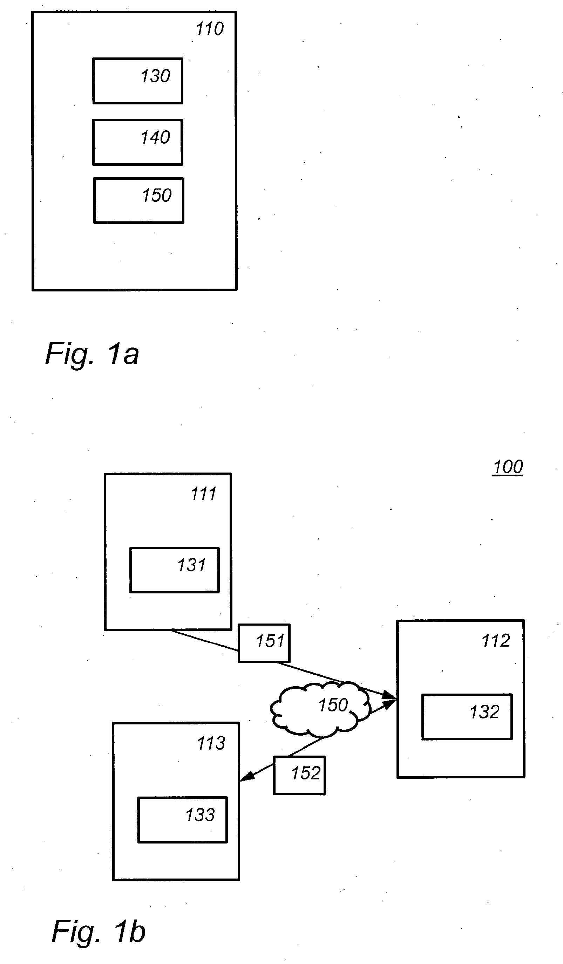

**Fig. 1a** schematically shows an example of a cryptographic computation device 110. Device 110 may be for performing an encrypted computation. The encrypted computation may comprise a blind rotation. The blind rotation may be configured to evaluate a decryption of an encrypted input in an exponent of an encrypted monomial.

Device 110 may comprise a processor system 130, a storage 140, and a communication interface 150. Storage 140 may comprise local storage, e.g., a local hard drive or electronic memory. Storage 140 may comprise non-local storage, e.g., cloud storage. In the latter case, storage 140 may comprise a storage interface to the non-local storage, For example, storage 140 may be for storing a bootstrapping key comprising key ciphertexts corresponding to a decryption key for the decryption of the encrypted input. Device 110 typically does not have access to the decryption key in plain form. Storage 140 may contain additional data, e.g., encrypted values on which the encrypted computation is performed.

Device 110 may communicate internally, with other devices, external storage, input devices, output devices, and/or one or more sensors over a computer network. The computer network may be an internet, an intranet, a LAN, a WLAN, etc. The computer network may be the Internet. The device may optionally comprise connection interface 150 which is arranged to communicate with other devices as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna. Communication, e.g., internal communication, may use other communication protocols or media, e.g., an internal data bus.

In device 110, the communication interface 150 may be used to send or receive digital data. For example, device 110 may be configured to receive or send data representing one or more encrypted values and/or encrypted polynomials, e.g., representing inputs and/or outputs of the encrypted computation. As another example, the communication interface 150 may be used to receive data representing one or more bootstrapping keys and/or one or more key switching keys.

The execution of device 110 may be implemented in a processor system 130, e.g., one or more processor circuits, e.g., microprocessors, examples of which are shown herein. Device 110 may comprise multiple processors, which may be distributed over different locations. For example, device 110 may use cloud computing.

Processor subsystem 130 may be configured to perform the blind rotation. Processor subsystem 130 may perform the blind rotation by determining a set of decryption ciphertexts for evaluating the decryption. The decryption ciphertexts may be determined by processor subsystem 130 based on the encrypted input and based on the key ciphertexts. To perform the blind rotation, processor subsystem 130 may further determine an encrypted output by determining an encrypted polynomial product of the decryption ciphertexts. The encrypted polynomial product may be determined processor subsystem 130 by computing multiple internal products. The internal products may be computed by processor subsystem 130 at least in part in parallel, e.g., using multithreading and/or multiprocessing. Also external products that make up one internal product may be computed at least in part in parallel.

For example, the processor subsystem 130 may support at least 6, at least 8, at least 16, or at least 96 parallel computations. For example, the processor subsystem 130 may comprise multiple cores, e.g., cores of a CPU or GPU, e.g., at least 8, at least 16, or at least 96 cores. In such cases, a first internal multiplication may be performed on a first core of the processor subsystem 130, and a second internal multiplication may be performed simultaneously on a second core of the processor subsystem 130.

Processor subsystem 130 may be configured to obtain one or more inputs to the encrypted computation, e.g., one or more encrypted input values and/or one or more encrypted input polynomials. Processor subsystem 130 may be configured to output one or more outputs of the encrypted computation, e.g., comprising one or more encrypted output values and/or one or more encrypted output polynomials. For example, processor subsystem 130 may obtain the inputs and/or output the outputs from/to storage 140 and/or from/to another party via communication interface 150. Determining the outputs may comprise performing one or more blind rotations as described herein.

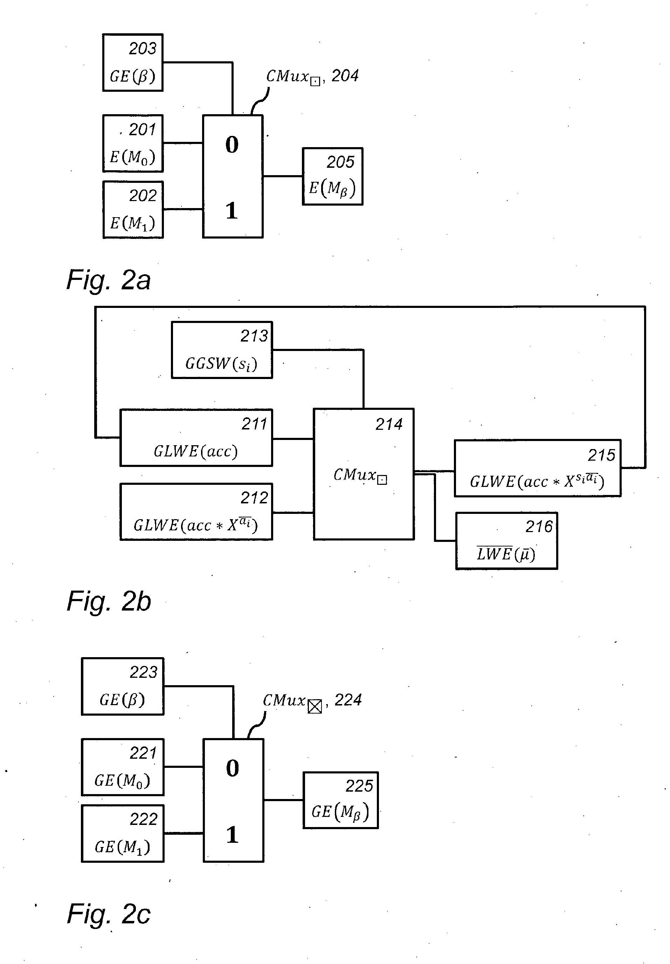

Some of the figures show functional units that may be functional units of the processor system. For example, a figure may be used as a blueprint of a possible functional organization of the processor system. The processor circuit(s) are not shown separate from the units in most figures. For example, the functional units shown in figures 2-5 (see below) may be wholly or partially implemented in computer instructions that are stored at a device such as device 110, e.g., in an electronic memory of device 110, and are executable by a microprocessor of device 110. In hybrid embodiments, functional units are implemented partially in hardware, e.g., as coprocessors, e.g., arithmetic and/or cryptographic coprocessors, and partially in software stored and executed on device 110.

For example, device 110 may be a device for performing an encrypted computation. The encrypted computation may use homomorphic encryption cryptography. For example, the device 110 may be used to perform an encrypted computation, e.g., the device may perform the computation even though said data is received in encrypted form, e.g., from a data provider, and even though the device 110 is not able to decrypt the data. The computation may involve blind rotations, key switchings, and/or sample extractions as described herein. The computation may comprise various other homomorphic encryption operations, e.g., linear operations, such as an addition, a subtraction, and/or a scalar multiplication; multiplications; univariate function evaluations; and the like.

For example, storage 140 may store encrypted data items, e.g., received from one or more data providers or generated as intermediate results or end results, e.g., outputs, of the computation. Typically, most or all data items on which the computation of device 110 is performed, are encrypted with a key (or keys) that is not known to device 110-that is device 110 may not be configured to obtain the plain data items corresponding to the encrypted data items, e.g., such as stored in storage 140. The decryption key in plain form is secret for device 110, though the encryption/decryption key may be available in encrypted form.

**Fig. 1b** schematically shows an example of an embodiment of an encrypted computation system 100. System 100 is configured for performing an encrypted computation using homomorphic encryption, e.g., fully homomorphic encryption.

The system 100 in this example comprises a key generation device 111, a data provider device 113 and a cryptographic device 112. Key generation device 111 may be combined with data provider device 113 in a single device. Device 112 may be configured to receive encrypted data items from a data provider 113. At least one or more data items may be received in encrypted form. One or more further data items may be received in plain format. Device 112 may be configured to receive key material, e.g., bootstrapping and/or key switching keys, for performing the encrypted computation from the key generation device 111.

Device 112 may perform the computation as described herein on the received data items and possibly also on stored data items. Interestingly, the computation may be performed by the device on the encrypted data, without decrypting the data, e.g., without converting encrypted data items to data in a plain format.

Device 112 in this example may be based on device 110 of Fig. 1a, e.g., may comprise processor system 130, storage 140, and/or communication interface 150 of Fig. 1a. Each of the devices 111, 112, 113 may be based on in general on the hardware configuration of device 110 of Fig. 1a, e.g., may each comprise a processor system, storage, and/or communication interface as in Fig. 1a. The figure shows the devices having respective processor subsystems 131, 132, 133 based on processor system 130 of Fig. 1a.

Although not shown in this figure, the encrypted computation system 100 may comprise multiple cryptographic devices, e.g., two, three or more than three. The encrypted computation may be distributed among the multiple cryptographic devices. The cryptographic devices may exchange intermediate computation results, typically encrypted, among each other. Each cryptographic device may be implemented like cryptographic device 112, and may perform encrypted operations as described herein.

Homomorphic encryption schemes can be applied in many settings. For example, encrypted cryptographic device 112 may be operated by a cloud provider. The cloud provider may offer computation and storage services to its clients. By employing homomorphic encryption, data provider device 113, e.g., a client of the cloud provider, can send their data in encrypted form. The cloud provider can still perform the required computations, and/or the required storage, but is not able to know the corresponding to plain data. For example, data provider device 113 may use an encryption key of a type corresponding to the particular homomorphic encryption system used to encrypt the data items. When computations results are received by data provider 113 from encrypted computing device 112, a corresponding decryption key may be used to decrypt the encrypted data items. Encryption and decryption keys may be the same-and in many cases are so.

For example, encrypted computation system 100 may be configured to train machine-learning models, e.g., image classifiers, e.g., medical models, without the encrypted computing devices having access to the plain data items. For example, linear regression may be performed on the input data, possibly, even without bootstrapping. For example, back-propagation may be performed on the input data, possibly, with bootstrapping. The resulting model parameters may be returned to an entity who is in possession of the decryption key. This enables multiple providers of medical data to pool their data, by sending the data to a cloud provider. The cloud provider then returns the model parameters, without ever having access to the plain data. Encryption keys may be equal to decryption keys.

After the model is trained, the encrypted computation system 100 may be used to offer the model, say, for use with medical data. This can be done with plain model parameters or encrypted model parameters-in both cases with encrypted data, e.g., encrypted input, intermediate and output data. Using plain model parameters is usually much more efficient: In both cases, an effect of the system is that a computation is performed, say an image classification, e.g., a medical image classification, without the computer knowing the plain data items. For example, a mammogram may be evaluated for cancer, without the image ever being in the plain at a cryptographic device 112 and without any cryptographic device 112, or a coalition of such devices, knowing what the outcome of the cancer evaluation is. From a privacy point of view it may be acceptable to operate a plain model on encrypted privacy sensitive data, while it might not be acceptable to operate on plain privacy sensitive data.

Other applications involve database services, e.g., looking up encrypted data in an encrypted database; for example, the computation may be a comparison between an input item and a database item. For example, multiple computations may be combined to produce a database index that matches an index. For example, the database, may be a genomic database, and the input a gene sequence. For example, system 100 may be used for protected control of a device. For example, a device, even a large device such as a power plant, may send sensor values to a cryptographic device 112, and receive encrypted control signals in return. The control signals being computed from the sensor signals. An attacker of the system may be able to determine the contents of data going to and from one or more cryptographic devices 112, or even gain access to intermediate data of these devices, but he will not be helped by that as the data is encrypted. Even a full break of all cryptographic devices 112 of a system 100 will not reveal the data, as the decryption key is not known to these devices. Computing the control signal may involve such mathematical operations as linear algebra, averages, matrix multiplication, polynomial evaluations, and so on, all of which are possible to execute with homomorphic encryption operations.

For example, a pool of encrypted data items may be maintained in the encrypted computation system; a subset of these may be received and another subset may be the result of an encrypted computation, e.g., intermediate results. For example, a cryptographic device 112 may be configured to apply a homomorphic encryption operation to one, two or more encrypted data items in a pool, e.g., a collection of input and/or intermediate and/or output values. The result may be a new encrypted data item that may be stored in the pool. The pool may be stored in a storage of the encrypted computation system. This may be local storage or a distributed storage. In the latter case, it may happen that one or more encrypted data items are represented multiple times in the pool. Encrypted data items may be sent from one computing device to another, e.g., if their values are needed elsewhere. The pool may be implemented in various ways, e.g., as a register file, an array, various data structure, and so on.

The encrypted data items may represent all kinds of data. For example, encrypted data items may represent numbers that need to be averaged, or which are used for linear regression, etc. For example, the encrypted data items may represent an image. For example, each pixel of the image may correspond to one or more encrypted data items. For example, a grey-scale pixel may be represented by a grey level, which in turn may be represented by a single encrypted data item. For example, 256 grey levels may be encoded in a single encrypted data item. For example, a colour pixel may be represented as multiple colour levels, e.g., RGB levels, which in turn may be represented by a tuple of encrypted data items. For example, three 256-level colours may be encoded as respective encrypted values.

A set of homomorphic encryption operations may be defined for the computation. For example, from the homomorphic encryption operations a network or circuit of operations may be built that together implement the computation, e.g., by a compiler device as described for Fig. 1b, or by the cryptographic device itself. For example, the operations may include Boolean operations. The way the homomorphic encryption operations are combined, e.g., which operation is applied to which operand in the pool, determines the computation that is being performed. For example, the computation may be represented as a list of homomorphic encryption operations that are to be performed together with an indication on which encrypted data item they are to be performed. The network or circuit may indicate to the cryptographic device 112 when to carry out a programmable bootstrapping or a blind rotation.

**Fig. 2a** shows a detailed, yet non-limiting, example of a controlled multiplexer operation $CMux_\square$, 204 that uses an external product. Such a controlled multiplexer is known e.g. from "TFHE: fast fully homomorphic encryption over the torus".

The CMux operation may effectively implement a homomorphic if condition that performs a selection under encryption of a first ciphertext 201 or a second ciphertext 202 depending on the value of a third ciphertext 203. The first and second ciphertexts 201, 202 may be non-gadget encryptions, e.g., GLWE or NTRU. The third ciphertext 203 may be a corresponding gadget encryption. All three encryptions 201-203 may use the same secret key. The selected value may be output as a non-gadget encryption 205, again under the same key.

For example, in the LWE setting, operation $CMux_\square$ 204 may take as input three ciphertexts encrypted under the same secret key as follows:

- first ciphertext $\mathrm{CT}_0 = \mathrm{GLWE}_s^q([\Delta \cdot M_0])$, 201, encrypting a message $M_0 \in \mathfrak{R}_q$;

- second ciphertext $\mathrm{CT}_1 = \mathrm{GLWE}_s^q([\Delta \cdot M_1])$, 202, encrypting a message $M_1 \in \Re_q$.

- third ciphertext $\overline{\overline{\mathrm{CT}}} = \mathrm{GGSW}_s^{q,\mathcal{B},\ell}(\beta)$, 203, encrypting a message $\beta \in \mathbb{B}$;

The result 205 may be a GLWE ciphertext $\mathrm{CT}' = \mathrm{GLWE}_s^q([\Delta \cdot M_\beta])$ encrypting, under the same secret key, the message $M_0$ if $\beta = 0$ or the message $M_1$ if $\beta = 1$. The operation may be performed using an external product $\boxdot$ as follows:

$$\mathrm{CT}' = \mathrm{CMux}^\boxdot\left(\overline{\overline{\mathrm{CT}}}, \mathrm{CT}_0, \mathrm{CT}_1\right) = (\mathrm{CT}_1 - \mathrm{CT}_0) \boxdot \overline{\overline{\mathrm{CT}}} + \mathrm{CT}_0.$$

**Fig. 2b** shows a detailed, yet non-limiting, example of a blind rotation operation using an external product. In particular, the blind rotation may evaluate a decryption of an encrypted input in an exponent of an encrypted monomial by using a controlled multiplexer using an external product, e.g., as discussed w.r.t. Fig. 2a. As illustrated in the figure, the blind rotation may be applied to a scaled LWE encryption $\overline{LWE(\mu)} = (\overline{a_1}, \dots, \overline{a_n}, \overline{b})$, 216, comprising mask values $\overline{a_1}$ and body value $\overline{b}$.

In particular, the figure shows an accumulator 211, in this case a GLWE-encrypted accumulator polynomial $GLWE(acc)$. The accumulator may be initialized based on a polynomial lookup table $\overline{v}$ to be evaluated and/or based on the body value. For example, the accumulator can be initialized to an encryption of the monomial $X^{-\overline{b}} \cdot \overline{v}$, e.g., a trivial encryption using fixed randomness. However, it is also possible e.g. to multiply by the body value and/or lookup table later, or to not use a lookup table, e.g., in order to implement a monomial lift operation.

In the blind rotation using the external product, the blind rotation may be performed by sequentially updating the accumulator 211 to obtain an updated accumulator 215, using an external product-based CMux operation $CMux_\boxdot$, 214 as discussed e.g. with respect to Fig. 2a. In particular, the accumulator 211 may be sequentially updated by using the CMux 214 to choose between a first ciphertext 211 and a second ciphertext 212 depending on a key ciphertext 213 of the bootstrapping key. The key ciphertext may encrypt a bit corresponding to a digit of the decryption key as a gadget ciphertext, e.g., $GGSW(s_i)$.

For example, the first ciphertext 211 can be the accumulator including a contribution to the decryption in case the key ciphertext 213 is zero, e.g., an encryption $GLWE(acc)$ of the accumulator itself. The second ciphertext 212 can be computed from the first ciphertext 211 as the accumulator including a contribution to the decryption in case the key ciphertext 214 is one, e.g., an encryption $GLWE(acc * X^{\overline{a_i}})$. The output of the CMux 214 may be a partial decryption, e.g., $GLWE(acc * X^{s_i \overline{a_i}})$ that incorporates the contribution to the decryption of the corresponding to the key ciphertext 213.

In particular, a blind rotation such as the one illustrated in this figure may be used as part of a programmable bootstrapping. Such a bootstrapping can have at least two functions: it can reduce the noise in ciphertexts and at the same time evaluate a univariate function. The programmable bootstrapping may involve the following steps:

• Modulus Switching: converting an input LWE ciphertext into a scaled ciphertext, e.g., by scaling from $\mathbb{Z}_q^{n+1}$ to $\mathbb{Z}_{2N}^{n+1}$;

• Blind Rotation: as discussed above, the blind rotation may rotate a GLWE encryption of a redundant LUT using a loop of sequential CMux, 214 operations according to the LWE ciphertext produced in the previous step and the public bootstrapping key;

• Sample Extraction: optionally, a fixed coefficient of the GLWE output of the previous step, typically the constant coefficient, may be extracted as a LWE ciphertext. This may be denoted $ct_{out} \leftarrow$ **SampleExtract**$(CT_{in}, i)$ where $i \in \{0, \cdots, N - 1\}$ denotes the desired coefficient to extract.

As discussed above, the initialization of the accumulator of the blind rotation does not need to involve a lookup table polynomial. This way, an operation may be obtained that takes in input a ciphertext of a message $m$ and returns in output another ciphertext encrypting the monomial corresponding to the plaintext, e.g., $X^{\pm(\Delta m + e)}$. This operation is also referred to as a monomial lift.

**Fig. 2c** shows a detailed, yet non-limiting, example of a controlled multiplexer operation. In this example, interestingly, the controlled multiplexer is implemented using an internal product. As also described elsewhere, such an internal product may multiply two gadget encryptions with the outcome being another gadget encryption.

In particular, a controlled multiplexer $CMux_{\boxtimes}$, 224 based on an internal product may take as input three ciphertexts encrypted under the same secret key. In particular, the ciphertexts may be gadget ciphertexts, e.g., GGSW ciphertexts, e.g.;

- a first ciphertext $\overline{\overline{\mathrm{CT}}}_0 = \mathrm{GGSW}_S^{q,\mathcal{B},\ell}(M_0)$ , 221, encrypting a message $M_0 \in \mathfrak{R}_q$ ;

- a second ciphertext $\overline{\overline{\mathrm{CT}}}_1 = \mathrm{GGSW}_S^{q,\mathcal{B},\ell}(M_1)$ , 222, encrypting a message $M_1 \in \mathfrak{R}_q$ .

- a third ciphertext $\overline{\overline{\mathrm{CT}}} = \mathrm{GGSW}_S^{q,\mathcal{B},\ell}(\beta)$ , 223 encrypting a message $\beta \in \mathbb{B}$ .

The result if the controlled multiplexer may be a ciphertext, e.g., $\overline{\overline{\mathrm{CT}}}' = \mathrm{GGSW}_S^{q,\mathcal{B},\ell}(M_\beta)$ ,225, encrypting, under the same secret key, the message $M_0$ of the first ciphertext 221 if the third ciphertext 223 encrypts $\beta = 0$ or the message $M_1$ of the second ciphertext 222 if the third ciphertext 223 encrypts $\beta = 1$. The operation may be performed as follows:

$$\overline{\overline{\mathrm{CT}}}' = \mathrm{CMux}^{\boxtimes}\left(\overline{\overline{\mathrm{CT}}}, \overline{\overline{\mathrm{CT}}}_0, \overline{\overline{\mathrm{CT}}}_1\right) = \left(\overline{\overline{\mathrm{CT}}}_1 - \overline{\overline{\mathrm{CT}}}_0\right) \boxtimes \overline{\overline{\mathrm{CT}}} + \overline{\overline{\mathrm{CT}}}_0.$$

Comparing the CMux 224 of Fig. 2c to the CMux 204 of Fig. 2a, it may be noted that the CMux 224 built with the internal product is typically more costly to execute than the CMux 204 built with the external product, since an internal product is more costly than an external product. Interestingly, however, it may be noted that using the internal product allows composability, because all the inputs and outputs are the same type of ciphertext. In particular, the outputs 225 of CMux 224 may be input into a further CMux, or multiplied using a further internal product, which is not possible with CMux 204. Various embodiments use this insight to provide an improved blind rotation.

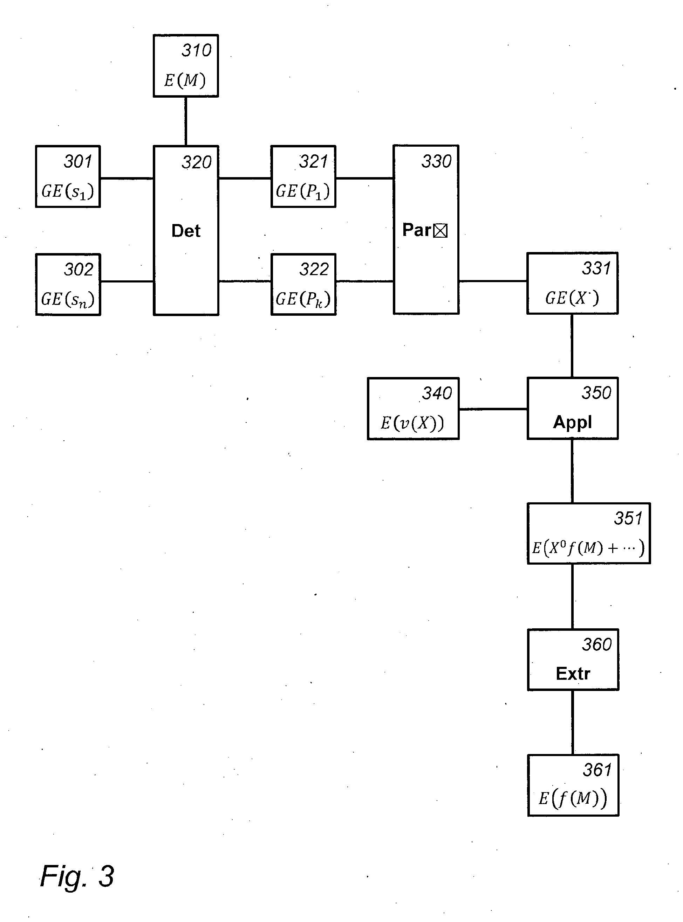

**Fig. 3** shows a detailed, yet non-limiting, example of a blind rotation operation using an internal product. The blind rotation may be configured to evaluate a decryption of an encrypted input in an exponent of an encrypted monomial. Compared to the external product-based blind rotation of Fig. 2b, this example illustrates a technique to instead use the internal product and to thereby break the sequentiality of CMuxes in TFHE-like bootstrappings.

In particular, instead of performing the blind rotation as a sequence of CMux operations, the blind rotation in this figure is based on computing an encrypted polynomial product of respective decryption ciphertexts that can be determined independently from each other. The encrypted polynomial product can then be evaluated using internal products that can be computed at least in part in parallel.

In particular, the figure shows an encrypted input $E(M)$, 310, to which the blind rotation is to be applied. For example, the encrypted input 310 can be a scaled LWE ciphertext obtained by a modulus switching as known per se.

The figure further shows a bootstrapping key. The bootstrapping key may comprise key ciphertexts corresponding to a decryption key for the decryption of the encrypted input 310. There are multiple key ciphertexts, e.g., at least 512, at least 1024, or at least 4096. In particular, the figure shows key ciphertexts $GE(s_1)$, 301 up to $GE(s_n)$, 302. The key ciphertexts 301-302 are typically gadget ciphertexts, e.g., GGSW or gadget NTRU ciphertexts. Depending on the particular blind rotation used, the key ciphertexts 301-302 may be encrypted bits of the decryption key; respective groups of encrypted bits representing respective non-binary digits of the decryption; or respective scalar multiples of the secret key, for example.

Interestingly, the inventors realized that the blind rotation may be performed by determining an encrypted polynomial product of a set of decryption ciphertexts $CE(P_1)$, 321 up to $GE(P_k)$, 322; typically, gadget ciphertexts. These decryption ciphertexts may be determined based on the encrypted input 310 and the key ciphertexts 301-302 in a determining operation **Det,** 320. The decryption ciphertexts may be determined fully or partially in parallel. There are multiple decryption ciphertexts. The number of determined decryption ciphertexts 321-322 can for example be at least equal to the number of bits, or other digits, of the decryption key; or at least half or at least a quarter of the number of digits. Generally, each decryption ciphertext is based on one or more key ciphertexts; in some cases, each key ciphertext is used in at least one decryption ciphertext, but in other cases, only a strict subset of key ciphertexts is used.

In a first possible implementation of the determining operation **Det,** a decryption ciphertext 321-322 may be determined based on a linear combination of one or more key ciphertexts 301-302, where the coefficient polynomials of this linear combination are determined based on the encrypted input. This implementation may be used in combination with key ciphertexts 310 that encrypt bits corresponding to the decryption key.

In particular, a coefficient polynomial may be based on a monomial that has a mask value of the encrypted input 310 as exponent, e.g., a monomial $X^{\bar{a}_i}$ for an LWE-encrypted input $(\bar{a}_1, \ldots, \bar{a}_n, \bar{b})$. A linear combination of key ciphertexts 301-302 according to such coefficients may include the monomial $X^{\bar{a}_i}$ if the corresponding key ciphertext encrypts one, while not including the monomial if the corresponding key ciphertext encrypts zero. In other words, the linear combination may include the term $X^{\bar{a}_i s_i}$. The combination of such terms may result in a LWE decryption of the input ciphertext.

For example, in the case where the respective key ciphertexts 301-302 encrypts bits $s_i$ of the decryption key $\mathbf{s} = (s_1, \ldots, s_n) \in \{0,1\}^n$, a decryption ciphertext 321-322 corresponding to a secret key bit $s_i$ may be determined as an encryption of the monomial $X^{\bar{a}_i s_i}$. Specifically, the coefficient polynomial $X^{\bar{a}_i} - 1$ may be equal to the monomial minus one, and the decryption ciphertext may be determined by adding an encryption of one, e.g., $G^{q,\mathcal{B},\ell}$ to the encrypted scalar product of the coefficient polynomial $X^{\bar{a}_i} - 1$ and the key ciphertext $\mathrm{GGSW}_{S'}^{q,\mathcal{B},\ell}(s_i)$. The decryption ciphertext may for example be computed as follows, for $1 \leq i \leq n$,

$$
\begin{aligned}
C_i &= \mathrm{GGSW}_{S'}^{q,\mathcal{B},\ell}(s_i) \cdot (X^{\bar{a}_i} - 1) + G^{q,\mathcal{B},\ell} \\
&= \mathrm{GGSW}_{S'}^{q,\mathcal{B},\ell}(s_i) \cdot X^{\bar{a}_i} - \mathrm{GGSW}_{S'}^{q,\mathcal{B},\ell}(s_i) + G^{q,\mathcal{B},\ell} \\
&= \mathrm{GGSW}_{S'}^{q,\mathcal{B},\ell}(s_i \cdot X^{\bar{a}_i} - s_i + 1) \\
&= \mathrm{GGSW}_{S'}^{q,\mathcal{B},\ell}(X^{\bar{a}_i s_i}).
\end{aligned}
$$

Another way of computing this decryption ciphertext, using an internal product and an encryption of the coefficient polynomial, is as follows:

$$
\begin{aligned}
C_i &= \mathrm{GGSW}_{S'}^{q,\mathcal{B},\ell}(s_i) \boxtimes \left( G^{q,\mathcal{B},\ell} \cdot X^{\bar{a}_i} - G^{q,\mathcal{B},\ell} \right) + G^{q,\mathcal{B},\ell} \\
&= \mathrm{GGSW}_{S'}^{q,\mathcal{B},\ell}(s_i \cdot (X^{\bar{a}_i} - 1) + 1) \\
&= \mathrm{GGSW}_{S'}^{q,\mathcal{B},\ell}(X^{\bar{a}_i s_i}).
\end{aligned}
$$

In this case, a single key ciphertext 301-302 and a single element of the encrypted input 310 may be used to obtain a decryption ciphertext 321-322 that encrypts a monomial $X^{\bar{a}_i s_i}$ having as exponent the product of decryption key element $s_i$ and mask value $\bar{a}_i$.

It is also possible to determine such a decryption ciphertext $X^{\bar{a}_i s_i}$ based on multiple key ciphertexts. This can be used for example where the respective decryption key digits are non-binary but represented by respective sets of encrypted bits 301-302. This is also particularly useful in the NTRU setting, where ternary keys are often used. As also mentioned elsewhere, the techniques of this figure also apply in that setting, with NTRU and gadget NTRU encryption being used instead of (G)LWE and GGSW.

For example, as is known per se, the digits of a ternary decryption key may be represented by pairs of bits as follows:

$$
\begin{cases}
s_i = 0 & \longmapsto (s_{i,0}, s_{i,1}) = (0,0) \\
s_i = 1 & \longmapsto (s_{i,0}, s_{i,1}) = (1,0). \\
s_i = -1 & \longmapsto (s_{i,0}, s_{i,1}) = (0,1)
\end{cases}
$$

Accordingly, the bootstrapping key may comprise respective pairs of GGSW encryptions for the respective key elements. Also in such a case, a decryption ciphertext 321-322 can be determined, e.g., as follows:

$$C_i = \text{GGSW}^{q,\mathfrak{B},\ell}_{S'}(s_{i,0}) \cdot (X^{\bar{a}_i} - 1) + \text{GGSW}^{q,\mathfrak{B},\ell}_{S'}(s_{i,1}) \cdot (X^{-\bar{a}_i} - 1) + G^{q,\mathfrak{B},\ell}$$

$$= \text{GGSW}^{q,\mathfrak{B},\ell}_{S'}(s_{i,0} \cdot (X^{\bar{a}_i} - 1) + s_{i,1} \cdot (X^{-\bar{a}_i} - 1) + 1)$$

$$= \text{GGSW}^{q,\mathfrak{B},\ell}_{S'}(X^{\bar{a}_i s_i}).$$

Also in this case, a coefficient polynomial $X^{\bar{a}_i} - 1$ is used that is equal to a monomial minus one, and an encryption $G^{q,\mathfrak{B},\ell}$ of one is added to the scalar product $\text{GGSW}^{q,\mathfrak{B},\ell}_{S'}(s_{i,0})$ . $(X^{\bar{a}_i} - 1)$ of the coefficient polynomial and key ciphertext. In this particular case, this is in combination with the use of a further coefficient polynomial $X^{-\bar{a}_i} - 1$ that is multiplied with a GGSW encryption of the value $s_{i,1}$.

Decryption ciphertexts 321-322 can be similarly determined for other non-binary LWE keys. Also in this case, it is possible to use an internal product to compute the linear combination $C_i$ of key ciphertexts.

It is also possible to determine a decryption ciphertext that is based on multiple key digits, e.g., key bits. This is analogous to the technique of T. Zhou et al., "Faster bootstrapping with multiple addends", DOI 10.1109/ACCESS.2018.2867655. Compared to determining $n$ decryption ciphertexts 321-322 corresponding to the $n$ digits of a LWE secret key $\mathbf{s} = (s_1, \ldots, s_n)$, this reference reduces the number of applications of the CMux operation of Fig. 2b. This is done by determining a linear combination of key ciphertexts. The secret key is divided into groups of multiple digits. For such a group of multiple digits, respective key ciphertexts encrypt indicator bits for combinations of possible values of the multiple digits. A key ciphertext may be 1 if the multiple digits are equal to a certain set of values, and 0 otherwise. For example, to reduce the number of CMuxes to $n/2$, a set of key ciphertexts for a pair of bits $s_i$, $s_{i+1}$ of a binary secret key may be defined as follows:

$$\begin{cases} \text{GGSW}^{q,\mathfrak{B},\ell}_{S'}(s_i \cdot s_{i+1}) & \text{encryption of 1 iff } s_i = 1, s_{i+1} = 1 \\ \text{GGSW}^{q,\mathfrak{B},\ell}_{S'}((1 - s_i) \cdot s_{i+1}) & \text{encryption of 1 iff } s_i = 0, s_{i+1} = 1 \\ \text{GGSW}^{q,\mathfrak{B},\ell}_{S'}(s_i \cdot (1 - s_{i+1})) & \text{encryption of 1 iff } s_i = 1, s_{i+1} = 0 \\ \text{GGSW}^{q,\mathfrak{B},\ell}_{S'}((1 - s_i) \cdot (1 - s_{i+1})) & \text{encryption of 1 iff } s_i = 0, s_{i+1} = 0 \end{cases}$$

Using such a bootstrapping, a decryption ciphertext 321-322 may be determined as a linear combination of the key ciphertext, with the coefficient polynomial for a particular set of values of a group of digits of the secret key corresponding to a decryption contribution of the encrypted input, corresponding to that particular set of values for the secret key digits, e.g.:

$$\text{GGSW}^{q,\mathfrak{B},\ell}_{S'}(X^{s_i \bar{a}_i + s_{i+1} \bar{a}_{i+1}}) = \begin{aligned} & \text{GGSW}^{q,\mathfrak{B},\ell}_{S'}(s_i \cdot s_{i+1}) \cdot X^{\bar{a}_i + \bar{a}_{i+1}} + \\ & \text{GGSW}^{q,\mathfrak{B},\ell}_{S'}((1 - s_i) \cdot s_{i+1}) \cdot X^{\bar{a}_{i+1}} + \\ & \text{GGSW}^{q,\mathfrak{B},\ell}_{S'}(s_i \cdot (1 - s_{i+1})) \cdot X^{\bar{a}_i} + \\ & \text{GGSW}^{q,\mathfrak{B},\ell}_{S'}((1 - s_i) \cdot (1 - s_{i+1})). \end{aligned}$$

More generally, by using groups of $k$ digits, the number of decryption ciphertexts 321-322 may be reduced by a factor $k$ (up to $n$) at the expense of increasing the number of key ciphertexts 301-302 of the bootstrapping key by a factor $2^k$ (up to $2^n$). In particular, in combination with using a product tree to multiply the decryption ciphertexts 321-322, as discussed elsewhere in more detail, groups of digits can be used to reduce the depth of the product tree, e.g., by doubling the number of key ciphertexts, the depth of the internal product tree can be reduced by one, e.g., to $log_2(n) - 1$.

In the above example, it may be noted that it is possible reduce the number of key ciphertexts by observing that a key ciphertext 301-302 encrypting one indicator bit may be written as one minus the encryptions of the remaining indicator bits. For example, since $(s_i \cdot s_{i+1}) + ((1 - s_i) \cdot s_{i+1}) + (s_i \cdot (1 - s_{i+1})) + ((1 - s_i) \cdot (1 - s_{i+1})) = 1$, a key ciphertext corresponding to $(s_i \cdot s_{i+1})$ may be computed as:

$$\mathrm{GGSW}_{S\prime}^{q,\mathfrak{B},\ell}(s_i \cdot s_{i+1}) = G^{q,\mathfrak{B},\ell} - \mathrm{GGSW}_{S\prime}^{q,\mathfrak{B},\ell}((1-s_i) \cdot s_{i+1})$$
$$-\mathrm{GGSW}_{S\prime}^{q,\mathfrak{B},\ell}(s_i \cdot (1-s_{i+1})) - \mathrm{GGSW}_{S\prime}^{q,\mathfrak{B},\ell}((1-s_i) \cdot (1-s_{i+1}))$$

Accordingly, the above linear combination $\mathrm{GGSW}_{S\prime}^{q,\mathfrak{B},\ell}(X^{s_i\bar{a}_i + s_{i+1}\bar{a}_{i+1}})$ can be adapted to take this relation into account, and similarly more general for groups of $k$ digits.

In the above examples, the determining operation **Det** was based on computing a linear combination of key ciphertexts 301-302 that encrypt bits. Another possibility is for determining operation **Det** to determine the decryption ciphertexts 321-322 as a subset of the key ciphertexts 301-302, where this subset is selected based on the encrypted input 310.

An example of a blind rotation that is based on selecting key ciphertexts, but that uses a sequence of external products, is discussed in Figure 3 of D. Micciancio et al., "Bootstrapping in FHEW-like Cryptosystems", Cryptology ePrint Archive, paper 2020/086.

Herein, a blind rotation is discussed that is referred to as an "accumulator update". The selected key ciphertexts are sequentially added to an accumulator ACC, denoted as $\mathbf{Z}_{j,c_j}$. Thereby, a decryption in an exponent of an encrypted monomial is achieved (referred to as a homomorphic accumulator scheme in that reference). In such a case, determining operation **Det** may select the ciphertexts for which $c_j > 0$ as in that reference, for example.

The figure further shows a parallel internal product operation **Par** $\boxtimes$, 330. This operation may determine an encrypted polynomial product 331 of the decryption ciphertexts 321-322. Interestingly, the polynomial product may be computed by computing multiple internal products. These internal products may be computed at least in part in parallel, thereby increasing the parallelizability of the blind rotation and improving performance in particular in multiprocessing/multithreading environments. Also external products performed as part of performing an internal product, can be performed wholly or partially in parallel, thereby further increasing parallelizability.

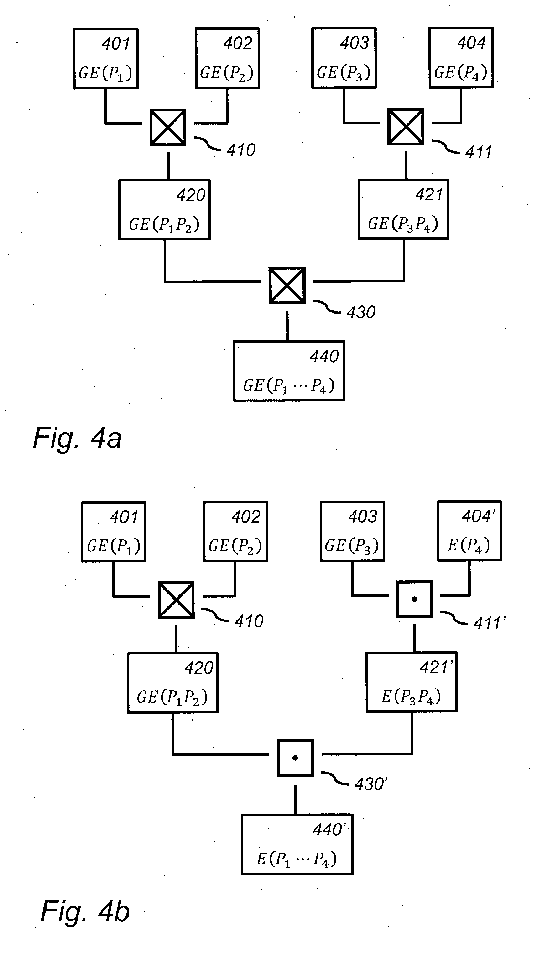

In particular, the product of the decryption ciphertexts may be computed by a logarithmic-depth product tree, as discussed in more detail with respect to Fig. 4a and Fig. 4b: Generally, the encrypted polynomial product 331 can be a gadget encryption such as GGSW (e.g., when using only internal products) or a non-gadget encryption such as GLWE (e.g., when using both internal and external products).

The output of the blind rotation may be based on the product of the decryption ciphertext. The output may further comprise a contribution based on the body value b of the ciphertext, for example, a body value polynomial $X^{-\bar{b}}$. Further, when using the blind rotation in a programmable bootstrapping, the blind rotation output may optionally comprise a contribution based on a lookup table represented by a so-called test polynomial $v(X)$. Thereby, a lookup table can be applied to the encrypted input 310. In particular, the product of the decryption ciphertexts 321-322 may be multiplied by a polynomial, e.g., $X^{-\bar{b}} \cdot v(X)$, corresponding to one or both contributions, obtaining an encrypted output 351 of the blind rotation. This can be done in several ways.

One possibility is that the body value polynomial and the test polynomial are included, separately or together, in the set of encryptions to which the parallel internal product operation 330 is applied. The encrypted polynomial product 331 may thus incorporate the body value and/or test polynomial. E.g., the body value polynomial and/or the test polynomial may be gadget-encrypted or non-gadget encrypted.

Another possibility is that the encrypted polynomial product 331 is gadget-encrypted, and that an application **Appl,** 350 is applied by computing a product of the encrypted polynomial product 331 with the body value polynomial and/or the test polynomial 340. The body value polynomial and/or the test polynomial can be unencrypted, gadget encrypted, or non-gadget encrypted; separately or together. In these respective cases, application operation **Appl** can be a scalar multiplication, an internal product, or an external product. In the first two cases, the output 351 may be gadget encrypted and in the third case the output 351 can be non-gadget encrypted.

A further possibility is that the encrypted polynomial product 331 is non-gadget encrypted, or that a non-gadget-encrypted (e.g., GLWE) polynomial product is extracted from a gadget-encrypted (e.g., GGSW) polynomial product 331. In such a case, the application operation **Appl** can be a scalar multiplication with an unencrypted body value polynomial and/or lookup table 340.

Out of these possibilities, the application **Appl** of the body value polynomial and the lookup table 340 as an external product to a gadget-encrypted polynomial product 331 may be preferred. This is because it is relatively efficient and results in comparatively little noise growth. For example, in case of a plain lookup table, a trivial GLWE encryption may be used in the external product, as follows:

$$\mathrm{GLWE}_{S'}^{q}\left(v(X) \cdot X^{-\bar{b}+\Sigma_{i=1}^{n} \bar{a}_i s_i}\right) = \left(0, v(X) \cdot X^{-\bar{b}}\right) \boxdot \mathrm{GGSW}_{S'}^{q,\mathfrak{B},\ell}\left(X^{\Sigma_{i=1}^{n} \bar{a}_i s_i}\right).$$

In case a lookup table 340 is applied, an extraction operation **Extr,** 360 may be applied to extract from the encrypted output 351 an encryption 361 of an output value of applying the lookup table to the encrypted input. Such an extraction operation, e.g., a sample extraction, is available for the various kinds of blind rotations described herein and may be implemented as is known per se. The sample extraction is typically not considered to be part of the blind rotation.

However, it is not needed to perform extraction **Extr** (directly) after computing the polynomial product. For example, no lookup table may be applied, and instead, the encrypted monomial 351 representing the decryption of the encrypted input 310 may itself be output for use in follow-up encrypted computations, as is known per se. This is also known as a monomial lift operation.

More generally, the described blind rotation can be used in various encrypted computations. For example, the blind rotation can be used in the so-called WoP-PBS from I. Chillotti et al., "Improved Programmable Bootstrapping with Larger Precision and Efficient Arithmetic Circuits for TFHE", proceedings ASIACRYPT 2021.

Or, the blind rotation can be used as part of a circuit bootstrapping as known e.g. from I. Chillotti et al., "Faster packed homomorphic operations and efficient circuit bootstrapping for TFHE", proceedings ASIACRYPT 2017; and I. Chillotti et al., "TFHE: fast fully homomorphic encryption over the torus", J. Cryptol., 33(1):34-91, 2020. The application to circuit bootstrapping is particularly advantageous since the circuit bootstrapping may comprise the evaluation of multiple bootstrappings on the same input. By implementing these multiple bootstrappings based on a single monomial lift performed as described herein, a particular efficiency improvement is obtained. As another example, the blind rotation can be performed as part of a lookup table evaluation that uses packing, e.g., vertical or mixed packing, e.g., as discussed in the references "Faster packed homomorphic operations and efficient circuit bootstrapping for TFHE", "TFHE: fast fully homomorphic encryption over the torus", and L. Bergerat et al., "Parameter Optimization & Larger Precision for (T)FHE", Cryptology ePrint Archive 2022/704 (available at https://eprint.iacr.org/2022/704).

**Fig. 4a** shows a detailed, yet non-limiting, example of an encrypted polynomial product operation.

The figure shows the computation of an encrypted polynomial product 440 of a number of decryption ciphertexts 401-404, by using a logarithmic-depth product tree of internal products. In particular, the leaf nodes of the tree may correspond to the decryption ciphertexts. An internal node may be computed as an internal product of its two child nodes. For example, node 420 may be computed by an internal product 410 of nodes 401 and 402, and node 421 may be computed by an internal product 411 of nodes 403 and 404, as follows:

$$
\begin{aligned}
C_{2i} \boxtimes C_{2i+1} &= \mathrm{GGSW}_{S'}^{q,\mathfrak{B},\ell}\left(X^{\bar{a}_{2i} s_{2i}}\right) \boxtimes \mathrm{GGSW}_{S'}^{q,\mathfrak{B},\ell}\left(X^{\bar{a}_{2i+1} s_{2i+1}}\right) \\
&= \mathrm{GGSW}_{S'}^{q,\mathfrak{B},\ell}\left(X^{\bar{a}_{2i} s_{2i}+\bar{a}_{2i+1} s_{2i+1}}\right).
\end{aligned}
$$

Similarly, node 440 may be computed by an internal product 430 of nodes 420 and 421 that are themselves based on multiple decryption ciphertexts. More generally, it is possible to compute, by a tree of depth $\log_2(n)$ of internal products, the encrypted polynomial product $\mathrm{GGSW}_{S'}^{q,\mathfrak{B},\ell}\left(X^{\Sigma_{i=1}^{n} \bar{a}_i s_i}\right)$, 440. In this case, the encrypted polynomial product is a gadget encryption.

In particular, the encrypted computation product can be computed by a logarithmic number of sets of multiplications, e.g., $\log_2 n$ sets, where the multiplications in the set can be computed in parallel. In particular, all multiplications at a certain level of the tree, e.g., multiplications 401-404 or multiplications 420-421, can be performed in parallel. (Although it is also possible e.g., to perform multiplications 401-402 and 421 in parallel, if desired.) Thus, given sufficient multiprocessing/multithreading capability, it is possible to significantly reduce the latency of a blind rotation computation, even to a latency that scales logarithmically in the number of decryption ciphertexts.

Although the figure shows a full binary tree having $2^k$ leaf nodes, this is not needed; in general, any number of decryption ciphertexts can be multiplied.

**Fig. 4b** shows a detailed, yet non-limiting, example of an encrypted polynomial product operation. This example is based on the example of Fig. 4a, but in this case, the encrypted polynomial product involves one or more external products. In particular, as the inventors realized, the final multiplication of the product tree can be implemented as an external product 430', leading to a non-gadget (e.g., GLWE) encrypted polynomial product 440'. In turn, one of the inputs of the external product 430' can be computed as an external product (or, it can be obtained as a gadget encryption from which a non-gadget encryption is obtained) 411'. More generally, starting from the root node 440' of the product tree, one or more subsequent layers of the product tree may comprise a non-gadget encryption to which an external product is applied. In particular, also one of the decryption ciphertexts 404' can be a non-gadget encryption, or can be extracted as a non-gadget encryption from a gadget encryption.

Using external products is beneficial in terms of efficiency, and is particularly preferred when no subsequent multiplication with a lookup table polynomial is needed after computing the encrypted polynomial product 440', e.g., when the lookup table polynomial is one of the encryptions 401-404' to be multiplied, or when the blind rotation is used in a monomial lift. When the encrypted polynomial product 440' is subsequently multiplied with a lookup table, it may be preferred to compute the encrypted polynomial product 440' only internal products, since this can give the encrypted polynomial product in gadget encrypted form, allowing a multiplication with the lookup table with little noise as also discussed with respect to Fig. 3.

By using the techniques provided herein, a large performance improvement can be achieved for encrypted computations in multiprocessing/multithreading environments. This is now illustrated with a comparison to a sequential blind rotation in the LWE setting, as proposed in "TFHE: fast fully homomorphic encryption over the torus" and "Programmable bootstrapping enables efficient homomorphic inference of deep neural networks".

In this setting, an internal product may correspond to computing $(k + 1)\ell$ external products. Concrete values of the parameters $k$ and $\ell$ that are used nowadays for example are $(k,\ell) = (1,3)$ or $(k,\ell) = (2,2)$. In this case, an internal product may correspond in terms of cost to 6 external products.

As also discussed elsewhere, external products computed as part of performing an internal product can also be executed in parallel, making the depth of an internal product be the same as the external product. It may also be noted that, at least in this setting, an external product and an internal product with same parameters make the noise grow in the same way.

Denoting the complexity of an external product by $\mathbb{C}_{\text{ExtProd}}$ (with implicit fixed parameters), the following comparison may be obtained in terms of complexity and depth in number of external products between a known accumulator-based sequential bootstrapping, and the proposed blind rotation that uses an internal product tree (including multiplication by the lookup table):

| Blind rotation construction | Complexity | Depth |
|---|---|---|
| Accumulator-based | $n \cdot \mathbb{C}_{\text{ExtProd}}$ | $n \cdot \mathbb{C}_{\text{ExtProd}}$ |
| Internal product tree | $((n - 1)(k + 1)\ell + 1) \cdot \mathbb{C}_{\text{ExtProd}}$ | $\log_2(n) \cdot \mathbb{C}_{\text{ExtProd}}$ |

The following table illustrates the effect of using multiple parallel units of computation for a blind rotation, e.g., multi-threading, by parallelizing internal and external products. The table shows the execution time for an accumulator-based blind rotation and for the proposed blind rotation, where in the latter the external products making up the different parallelizable internal products, are executed in parallel. Denote by $T_{ExtProd}$ the time for executing an external product. This example uses parameters $k = 1$ and $\ell = 3$. In this case, it may be observed that the proposed techniques provide an improvement when more than 6 parallel computational units are available. In practice, the number of parallel computational units can be much more, e.g., at least 8, at least 16, or at least 96.

| Computation Units | Accumulator-based | Internal product tree |
|---|---|---|
| 1 | $n \cdot T_{ExtProd}$ | $(6(n - 1) + 1) \cdot T_{ExtProd}$ |
| 2 | $n \cdot T_{ExtProd}$ | $(3(n - 1) + 1) \cdot T_{ExtProd}$ |
| 4 | $n \cdot T_{ExtProd}$ | $\approx (3/2(n - 1) + 1) \cdot T_{ExtProd}$ |
| 6 | $n \cdot T_{ExtProd}$ | $n \cdot T_{ExtProd}$ |
| 8 | $n \cdot T_{ExtProd}$ | $\approx (3/4(n - 1) + 1) \cdot T_{ExtProd}$ |

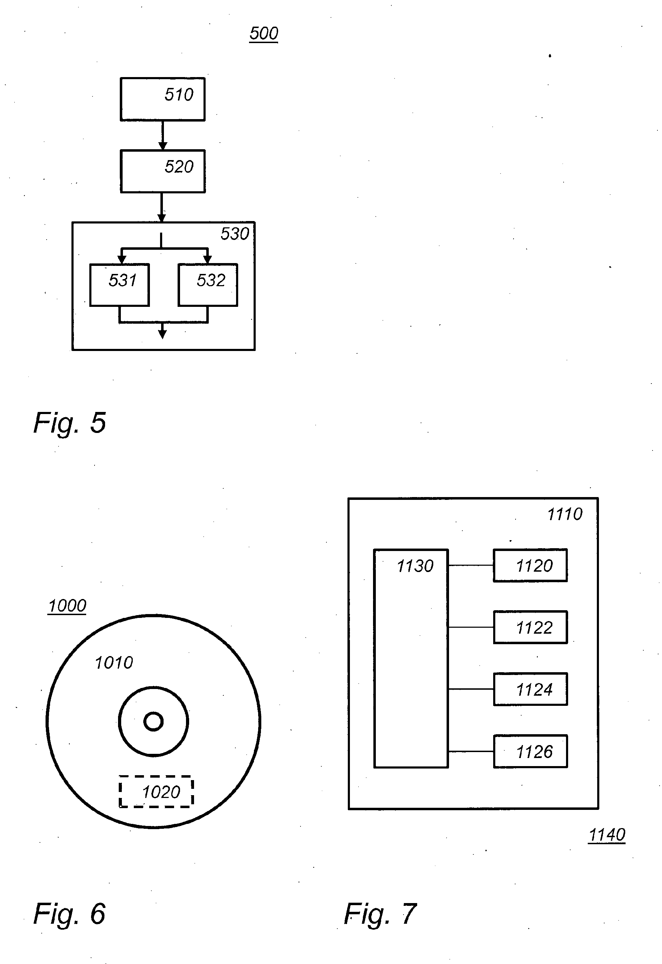

**Fig. 5** schematically shows an example of an embodiment of a cryptographic method 500 of performing an encrypted computation. Method 500 may be computed-implemented. The encrypted computation may comprise a blind rotation. The blind rotation may be configured to evaluate a decryption of an encrypted input in an exponent of an encrypted monomial.

To perform the blind rotation, the method 500 may comprise obtaining 510 a bootstrapping key comprising key ciphertexts corresponding to a decryption key for the decryption of the encrypted input.

To perform the blind rotation, the method 500 may further comprise determining 520 a set of decryption ciphertexts for evaluating the decryption. The decryption ciphertexts may be determined based on the encrypted input and based on the key ciphertexts.

To perform the blind rotation, the method 500 may further comprise determining 530 an encrypted output by determining an encrypted polynomial product of the decryption ciphertexts. The encrypted polynomial product may be determined by computing 531, 532 multiple internal products. The internal products may be computed at least in part in parallel.

Many different ways of executing the method(s) 500 are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the methods may be executed using software, which comprises instructions for causing a processor system to perform method 500. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

Typically, the devices described herein, e.g., in Fig. 1a-1b, comprise one or more microprocessors which executes appropriate software stored at the system; for example, that software may have been downloaded and/or stored in a corresponding memory, e.g., a volatile memory such as RAM or a non-volatile memory such as Flash. Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, the systems may comprise circuits for the evaluation of cryptographic primitives.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

**Fig. 6** shows a computer readable medium 1000 having a writable part 1010. Computer readable medium 1000 is shown in the form of an optically readable medium. Computer readable medium 1000 may store data 1020 wherein the data may indicate instructions, which when executed by a processor system, cause a processor system to perform an embodiment of a method of performing an encrypted computation according to an embodiment.

The data 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable.

**Fig. 7** shows in a schematic representation of a processor system 1140 according to an embodiment of a device for performing an encrypted computation. The processor system comprises one or more integrated circuits 1110. The architecture of the one or more integrated circuits 1110 is schematically shown in the figure. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the device for performing the encrypted computation, may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While device 1110 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the device 1110 is implemented in a cloud computing system, the various hardware components may belong to separate physical systems. For example, the processor 1120 may include a first processor in a first server and a second processor in a second server.

Interestingly, processor 1120 may have multiprocessing and/or multi-threading capabilities, e.g., the processor 1120 may have multiple cores, allowing multiple internal products to be computed in parallel.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A cryptographic method (500) of performing an encrypted computation, wherein the encrypted computation comprises a blind rotation, wherein the blind rotation is configured to evaluate a decryption of an encrypted input in an exponent of an encrypted monomial, wherein performing the blind rotation comprises:

   - obtaining (510) a bootstrapping key comprising key ciphertexts, wherein the key ciphertexts correspond to a decryption key for the decryption of the encrypted input;
   - determining (520) a set of decryption ciphertexts for evaluating the decryption, wherein the decryption ciphertexts are determined based on the encrypted input and based on the key ciphertexts; **characterised by**
   - determining (530) an encrypted output, comprising determining an encrypted polynomial product of the decryption ciphertexts, wherein determining the encrypted polynomial product comprises computing (531, 532) multiple internal products, and wherein the internal products are computed at least in part in parallel.

2. The method (500) of claim 1, wherein a decryption ciphertext is determined based on a linear combination of one or more key ciphertexts, wherein the one or more key ciphertexts encrypt bits and wherein coefficient polynomials of the linear combination are determined based on the encrypted input.

3. The method (500) of claim 2, wherein a coefficient polynomial for a key ciphertext is based on a monomial having a mask value of the encrypted input as exponent.

4. The method (500) of claim 2 or 3, wherein the decryption ciphertext encrypts a monomial having as exponent a product of an element of the decryption key and a mask value of the encrypted input.

5.  The method (500) of claim 1, wherein the decryption ciphertexts are a subset of the key ciphertexts, wherein the subset is selected based on the encrypted input.

6.  The method (500) of any preceding claim, wherein the encrypted output encrypts a polynomial representing the application of a lookup table to the encrypted input, and wherein the encrypted output is based on computing an encrypted polynomial product of the decryption ciphertexts and a test polynomial encoding the lookup table.

7.  The method (500) of claim 6, further comprising extracting from the encrypted polynomial product an encryption of an output value of applying the lookup table to the encrypted input.

8.  The method (500) of any preceding claim, wherein the encrypted polynomial product is computed by a logarithmic-depth product tree.

9.  The method (500) of any preceding claim, wherein determining the encrypted polynomial product comprises computing an internal product of first and second ciphertexts, wherein the first and second ciphertexts are both based on multiple decryption ciphertexts.

10. The method (500) of any preceding claim, wherein the encrypted polynomial product is a gadget encryption of the polynomial product.

11. The method (500) of claim 10, wherein the encrypted output is determined by computing an external product of the gadget encryption with a further encryption, or by extracting the output from the gadget encryption.

12. The method (500) of any one of claims 1-9, wherein the encrypted polynomial product is computed by further computing one or more external products.

13. A cryptographic device (110) for performing an encrypted computation, wherein the encrypted computation comprises a blind rotation, wherein the blind rotation is configured to evaluate a decryption of an encrypted input in an exponent of an encrypted monomial, wherein the device comprises:

    - a storage (140) for storing a bootstrapping key comprising key ciphertexts corresponding to a decryption key for the decryption of the encrypted input;
    - a processor subsystem (130) configured to perform the blind rotation by:

        - determining a set of decryption ciphertexts for evaluating the decryption, wherein the decryption ciphertexts are determined based on the encrypted input and based on the key ciphertexts; **characterised by**
        - determining an encrypted output, comprising determining an encrypted polynomial product of the decryption ciphertexts, wherein determining the encrypted polynomial product comprises computing multiple internal products, and wherein the internal products are computed at least in part in parallel.

14. The device (110) of claim 13, wherein the processor subsystem (130) comprises multiple cores, wherein a first internal multiplication is performed on a first core and a second internal multiplication is simultaneously performed on a second core.

15. A transitory or non-transitory computer-readable storage medium (1000) comprising data (1020) representing instructions which, when executed by a processor system, cause the processor system to perform the method according to any one of claims 1-12.

**Patentansprüche**

1.  Ein Kryptografieverfahren (500) zum Durchführen einer verschlüsselten Berechnung, wobei die verschlüsselte Berechnung eine Blindrotation umfasst, wobei die Blindrotation konfiguriert ist, um eine Entschlüsselung einer verschlüsselten Eingabe in einen Exponenten eines verschlüsselten Monoms zu bewerten, wobei Durchführen der Blindrotation umfasst:

    Erhalten (510) eines Bootstrapping-Schlüssels, der Schlüsselgeheimtexte umfasst, wobei die Schlüsselgeheimtexte einem Entschlüsselungsschlüssel zur Entschlüsselung der verschlüsselten Eingabe entsprechen;

Bestimmen (520) eines Satzes von Entschlüsselungsgeheimtexten zum Bewerten der Entschlüsselung, wobei die Entschlüsselungsgeheimtexte auf der Grundlage der verschlüsselten Eingabe und auf der Grundlage der Schlüsselgeheimtexte bestimmt werden; **gekennzeichnet durch**

Bestimmen (530) einer verschlüsselten Ausgabe, die Bestimmen eines verschlüsselten Polynomprodukts der Entschlüsselungsgeheimtexte umfasst, wobei das Bestimmen des verschlüsselten Polynomprodukts das Berechnen (531, 532) mehrfacher innerer Produkte umfasst und wobei die inneren Produkte zumindest teilweise parallel berechnet werden.

2. Das Verfahren (500) nach Anspruch 1, wobei ein Entschlüsselungsgeheimtext auf der Grundlage einer linearen Kombination von einem oder mehreren Schlüsselgeheimtexten bestimmt wird, wobei der eine oder die mehreren Schlüsselgeheimtexte Bits verschlüsseln und wobei Koeffizientenpolynome der linearen Kombination auf der Grundlage der verschlüsselten Eingabe bestimmt werden.

3. Das Verfahren (500) nach Anspruch 2, wobei ein Koeffizientenpolynom für einen Schlüsselgeheimtext auf einem Monom basiert, das einen Maskenwert der verschlüsselten Eingabe als Exponenten aufweist.

4. Das Verfahren (500) nach Anspruch 2 oder 3, wobei der Entschlüsselungsgeheimtext ein Monom verschlüsselt, das als Exponenten ein Produkt eines Elements des Entschlüsselungsschlüssels und einen Maskenwert der verschlüsselten Eingabe aufweist.

5. Das Verfahren (500) nach Anspruch 1, wobei die Entschlüsselungsgeheimtexte eine Teilmenge der Schlüsselgeheimtexte sind, wobei die Teilmenge auf der Grundlage der verschlüsselten Eingabe ausgewählt wird.

6. Das Verfahren (500) nach einem vorstehenden Anspruch, wobei die verschlüsselte Ausgabe ein Polynom verschlüsselt, das die Anwendung einer Nachschlagetabelle an der verschlüsselten Eingabe darstellt, und wobei die verschlüsselte Ausgabe auf dem Berechnen eines verschlüsselten Polynomprodukts der Entschlüsselungsgeheimtexte und eines Testpolynoms, das die Nachschlagetabelle codiert, basiert.

7. Das Verfahren (500) nach Anspruch 6, das weiter das Extrahieren, aus dem verschlüsselten Polynomprodukt, einer Verschlüsselung eines Ausgabewerts des Anwendens der Nachschlagetabelle an der verschlüsselten Eingabe umfasst.

8. Das Verfahren (500) nach einem vorstehenden Anspruch, wobei das verschlüsselte Polynomprodukt durch einen Produktbaum mit logarithmischer Tiefe berechnet wird.

9. Das Verfahren (500) nach einem vorstehenden Anspruch, wobei das Bestimmen des verschlüsselten Polynomprodukt das Berechnen eines inneren Produkts aus ersten und zweiten Geheimtexten umfasst, wobei die ersten und zweiten Geheimtexte beide auf mehrfachen Entschlüsselungsgeheimtexten basieren.

10. Das Verfahren (500) nach einem vorstehenden Anspruch, wobei das verschlüsselte Polynomprodukt eine Gadget-Verschlüsselung des Polynomprodukts ist.

11. Das Verfahren (500) nach Anspruch 10, wobei die verschlüsselte Ausgabe durch Berechnen eines äußeren Produkts aus der Gadget-Verschlüsselung mit einer weiteren Verschlüsselung oder durch Extrahieren der Ausgabe aus der Gadget-Verschlüsselung bestimmt wird.

12. Das Verfahren (500) nach einem der Ansprüche 1-9, wobei das verschlüsselte Polynomprodukt durch weiteres Berechnen eines oder mehrerer äußerer Produkte berechnet wird.

13. Eine Kryptografievorrichtung (110) zum Durchführen einer verschlüsselten Berechnung, wobei die verschlüsselte Berechnung eine Blindrotation umfasst, wobei die Blindrotation konfiguriert ist, um eine Entschlüsselung einer verschlüsselten Eingabe in einen Exponenten eines verschlüsselten Monoms zu bewerten, wobei die Vorrichtung umfasst:

einen Speicher (140) zum Speichern eines Bootstrapping-Schlüssels, der Schlüsselgeheimtexte umfasst, die einem Entschlüsselungsschlüssel zur Entschlüsselung der verschlüsselten Eingabe entsprechen;
ein Prozessor-Teilsystem (130), das konfiguriert ist, um die Blindrotation durchzuführen durch:

Bestimmen eines Satzes von Entschlüsselungsgeheimtexten zum Bewerten der Entschlüsselung, wobei die Entschlüsselungsgeheimtexte auf der Grundlage der verschlüsselten Eingabe und auf der Grundlage der Schlüsselgeheimtexte bestimmt werden; **gekennzeichnet durch**

Bestimmen einer verschlüsselten Ausgabe, umfassend Bestimmen eines verschlüsselten Polynomprodukts der Entschlüsselungsgeheimtexte, wobei das Bestimmen des verschlüsselten Polynomprodukts das Berechnen mehrfacher innerer Produkte umfasst und wobei die inneren Produkte zumindest teilweise parallel berechnet werden.

14. Die Vorrichtung (110) nach Anspruch 13, wobei das Prozessor-Teilsystem (130) mehrfache Kerne umfasst, wobei eine erste innere Multiplikation an einem ersten Kern durchgeführt wird und eine zweite Multiplikation gleichzeitig an einem zweiten Kern durchgeführt wird.

15. Ein flüchtiges oder nichtflüchtiges computerlesbares Speichermedium (1000), umfassend Daten (1020), die Anweisungen darstellen, die, wenn sie von einem Prozessorsystem ausgeführt werden, das Prozessorsystem veranlassen, das Verfahren nach einem der Ansprüche 1-12 durchzuführen.

**Revendications**

1. Un procédé cryptographique (500) consistant à réaliser un calcul chiffré, dans lequel le calcul chiffré comprend une rotation aveugle, dans lequel la rotation aveugle est configurée pour évaluer un déchiffrement d'une entrée chiffrée dans un exposant d'un monôme chiffré, dans lequel la réalisation de la rotation aveugle comprend :

l'obtention (510) d'une clé d'amorçage comprenant des textes chiffrés de clé, dans lequel les textes chiffrés de clé correspondent à une clé de déchiffrement destinée au déchiffrement de l'entrée chiffrée ;
la détermination (520) d'un ensemble de textes chiffrés de déchiffrement pour évaluer le déchiffrement, dans lequel les textes chiffrés de déchiffrement sont déterminés sur la base de l'entrée chiffrée et sur la base des textes chiffrés de clé ; **caractérisé par**
la détermination (530) d'une sortie chiffrée, comprenant la détermination d'un produit de polynômes chiffré des textes chiffrés de déchiffrement, dans lequel la détermination du produit de polynômes chiffré comprend le calcul (531, 532) de multiples produits internes, et dans lequel les produits internes sont calculés au moins en partie en parallèle.

2. Le procédé (500) selon la revendication 1, dans lequel un texte chiffré de déchiffrement est déterminé sur la base d'une combinaison linéaire d'un ou plusieurs textes chiffrés de clé, dans lequel les un ou plusieurs textes chiffrés de clé chiffrent des bits et dans lequel des polynômes à coefficient de la combinaison linéaire sont déterminés sur la base de l'entrée chiffrée.

3. Le procédé (500) selon la revendication 2, dans lequel un polynôme à coefficient pour un texte chiffré de clé est basé sur un monôme présentant une valeur de masque de l'entrée chiffrée en tant qu'exposant.

4. Le procédé (500) selon la revendication 2 ou 3, dans lequel le texte chiffré de déchiffrement chiffre un monôme présentant en tant qu'exposant un produit d'un élément de la clé de déchiffrement et d'une valeur de masque de l'entrée chiffrée.

5. Le procédé (500) selon la revendication 1, dans lequel les textes chiffrés de déchiffrement sont un sous-ensemble des textes chiffrés de clé, dans lequel le sous-ensemble est sélectionné sur la base de l'entrée chiffrée.

6. Le procédé (500) selon une quelconque revendication précédente, dans lequel la sortie chiffrée chiffre un polynôme représentant l'application d'une table de consultation à l'entrée chiffrée, et dans lequel la sortie chiffrée est basée sur un calcul d'un produit de polynômes chiffré des textes chiffrés de déchiffrement et d'un polynôme de test codant la table de consultation.

7. Le procédé (500) selon la revendication 6, comprenant en outre l'extraction à partir du produit de polynômes chiffré d'un chiffrement d'une valeur de sortie d'application de la table de consultation à l'entrée chiffrée.

8. Le procédé (500) selon une quelconque revendication précédente, dans lequel le produit de polynômes chiffré est calculé par un arbre de produits de profondeur logarithmique.

**9.** Le procédé (500) selon une quelconque revendication précédente, dans lequel la détermination du produit de polynômes chiffré comprend le calcul d'un produit interne de premier et second textes chiffrés, dans lequel les premier et second textes chiffrés sont tous deux basés sur de multiples textes chiffrés de déchiffrement.

**10.** Le procédé (500) selon une quelconque revendication précédente, dans lequel le produit de polynômes chiffré est un chiffrement gadget du produit de polynômes.

**11.** Le procédé (500) selon la revendication 10, dans lequel la sortie chiffrée est déterminée par calcul d'un produit externe du chiffrement gadget avec un autre chiffrement, ou par extraction de la sortie à partir du chiffrement gadget.

**12.** Le procédé (500) selon l'une quelconque des revendications 1-9, dans lequel le produit de polynômes chiffré est calculé par calcul ultérieur d'un ou plusieurs produits externes.

**13.** Un dispositif cryptographique (110) pour réaliser un calcul chiffré, dans lequel le calcul chiffré comprend une rotation aveugle, dans lequel la rotation aveuglée est configurée pour évaluer un déchiffrement d'une entrée chiffrée dans un exposant d'un monôme chiffré, dans lequel le dispositif comprend :

une mémoire (140) pour stocker une clé d'amorçage comprenant des textes chiffrés de clé correspondant à une clé de chiffrement destinée au déchiffrement de l'entrée chiffrée ;
un sous-système processeur (130) configuré pour effectuer la rotation aveugle par :

la détermination d'un ensemble de textes chiffrés de déchiffrement pour évaluer le déchiffrement, dans lequel les textes chiffrés de déchiffrement sont déterminés sur la base de l'entrée chiffrée et sur la base des textes chiffrés de clé ; **caractérisé par**
la détermination d'une sortie chiffrée, comprenant la détermination d'un produit de polynômes chiffré des textes chiffrés de déchiffrement, dans lequel la détermination du produit de polynômes chiffré comprend le calcul de multiples produits internes, et dans lequel les produits internes sont calculés au moins en partie en parallèle.

**14.** Le dispositif (110) selon la revendication 13, dans lequel le sous-système processeur (130) comprend de multiples coeurs, dans lequel une première multiplication interne est effectuée sur un premier coeur et une seconde multiplication interne est effectuée simultanément sur un second coeur.

**15.** Un support de stockage transitoire ou non transitoire lisible par ordinateur (1000) comprenant des données (1020) représentant des instructions qui, lorsqu'elles sont exécutées par un système processeur, amènent le système processeur à effectuer le procédé selon l'une quelconque des revendications 1-12.

*110*

*130*

*140*

*150*

# Fig. 1a

*100*

*111*

*131*

*151*

*150*

*112*

*132*

*113*

*152*

*133*

# Fig. 1b

**Fig. 2a**

**Fig. 2b**

**Fig. 2c**

*Fig. 3*

| 401 | | 402 | | 403 | | 404 |
|---|---|---|---|---|---|---|
| $GE(P_1)$ | | $GE(P_2)$ | | $GE(P_3)$ | | $GE(P_4)$ |

$\boxtimes$ ~ 410

$\boxtimes$ ~ 411

| 420 |
|---|
| $GE(P_1 P_2)$ |

| 421 |
|---|
| $GE(P_3 P_4)$ |

$\boxtimes$ ~ 430

| 440 |
|---|
| $GE(P_1 \cdots P_4)$ |

## Fig. 4a

| 401 | | 402 | | 403 | | 404' |
|---|---|---|---|---|---|---|
| $GE(P_1)$ | | $GE(P_2)$ | | $GE(P_3)$ | | $E(P_4)$ |

$\boxtimes$ ~ 410

$\boxdot$ ~ 411'

| 420 |
|---|
| $GE(P_1 P_2)$ |

| 421' |
|---|
| $E(P_3 P_4)$ |

$\boxdot$ ~ 430'

| 440' |
|---|
| $E(P_1 \cdots P_4)$ |

## Fig. 4b

_500_

**Fig. 5**

_1000_

**Fig. 6**

_1140_

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. CHILLOTTI et al.** TFHE: fast fully homomorphic encryption over the torus. *J. Cryptol.,* 2020, vol. 33 (1), 34-91
- Programmable bootstrapping enables efficient homomorphic inference of deep neural networks. **I. CHILLOTTI et al.** Cyber Security Cryptography and Machine Learning. Springer, 2021, vol. 12716, 1-19
- **CHILLOTTI ILARIA et al.** TFHE: Fast Fully Homomorphic Encryption Over the Torus. *JOURNAL OF CRYPTOLOGY, SPRINGER US, NEW YORK,* 25 April 2019, vol. 33 (1), ISSN 0933-2790, 34-91
- **JOYE MARC et al.** Blind Rotation in Fully Homomorphic Encryption with Extended Keys. SPRINGER INTERNATIONAL PUBLISHING, 1-18
- **C. BONTE et al.** *FINAL: Faster FHE instantiated with NTRU and LWE, https://ia.cr/2022/074*
- **K. KLUCZNIAK.** *NTRU-v-um: Secure Fully Homomorphic Encryption from NTRU with Small Modulus, https://ia.cr/2022/089*
- Homomorphic encryption: From private-key to public-key. **R. ROTHBLUM.** Theory of Cryptography. Springer, 2011, vol. 6597, 219-234
- **K. KLUCZNIAK.** *NTRU-v-um: Secure Fully Homomorphic Encryption from NTRU with Small Modulus, https://ia.cr/2022/089.*
- **L. DUCAS et al.** FHEW: bootstrapping homomorphic encryption in less than a second. *proceedings EUROCRYPT,* 2015
- **J. H. CHEON et al.** Homomorphic encryption for arithmetic of approximate numbers. *proceedings ASIACRYPT,* 2017
- **C. BOURA et al.** CHIMERA: Combining Ring-LWE-based Fully Homomorphic Encryption Schemes. *J. Math. Cryptol.,* 2020, vol. 14 (1), 316-338
- **M. ALBRECHT et al.** On the concrete hardness of Learning with Errors. *Journal of Mathematical Cryptology,* 2015, vol. 9 (3), 169-203
- **T. ZHOU et al.** *Faster bootstrapping with multiple addends*
- **D. MICCIANCIO et al.** Bootstrapping in FHEW-like Cryptosystems. *Cryptology ePrint Archive, paper 2020/086*
- **I. CHILLOTTI et al.** Improved Programmable Bootstrapping with Larger Precision and Efficient Arithmetic Circuits for TFHE. *proceedings ASIACRYPT,* 2021
- **I. CHILLOTTI et al.** Faster packed homomorphic operations and efficient circuit bootstrapping for TFHE. *proceedings ASIACRYPT,* 2017
- **L. BERGERAT et al.** Parameter Optimization & Larger Precision for (T)FHE. *Cryptology ePrint Archive 2022/704, https://eprint.iacr.org/2022/704*